# EUROPEAN PATENT SPECIFICATION

(11) **EP 1 170 747 B1**
(45) Date of publication and mention of the grant of the patent: **14.02.2007**
(21) Application number: 00906701.8
(22) Date of filing: 03.03.2000
(51) Int. Cl.: G11B 27/10, G11B 27/031, G06F 12/00

(54) **FILE MANAGING SYSTEM**
DATEIVERWALTUNGSSYSTEM
SYSTEME DE GESTION DE FICHIER

(30) Priority: 05.04.1999 JP 9712699
(43) Date of publication of application: 09.01.2002
(73) Proprietor: SHARP KABUSHIKI KAISHA, Osaka-shi, Osaka 545-8522 (JP)
(72) Inventor: SHIOI, Masahiro, Chiba-shi, Chiba 266-0005 (JP); NOMURA, Toshio, Ichihara-shi, Chiba 290-0056 (JP)
(74) Representative: Brown, Kenneth Richard
(86) International application number: PCT/JP2000/001315
(87) International publication number: WO 2000/060596

(56) References cited:
- JP-A- 2 178 878
- JP-A- 8 202 889
- JP-A- 10 097 639
- US-A- 5 774 435
- PATENT ABSTRACTS OF JAPAN vol. 018, no. 300 (P-1750), 8 June 1994 (1994-06-08) -& JP 06 059953 A (NEC CORP), 4 March 1994 (1994-03-04)
- PATENT ABSTRACTS OF JAPAN vol. 016, no. 231 (P-1361), 28 May 1992 (1992-05-28) -& JP 04 049417 A (CASIO COMPUT CO LTD), 18 February 1992 (1992-02-18)

## Description

### Technical Field

The present invention relates to a file managing device, and particularly relates to a file managing device for managing multimedia information files recorded on a record medium.

### Background Art

In the prior art, devices for taking in multimedia information such as sounds and movies generally store the multimedia information in such a file recording system that uses removable media such as a PC (Personal Computer) card or a SmartMedia, and employs a DOS (Disk Operating System) file system. This is for the purpose of allowing reproduction of the file, which was taken by the shooting device, on personal computers (which will also be referred to as "PCs" hereinafter).

For the above reproduction, it is necessary that the shooting device prepares the files in a format that allows reproduction by reproduction software (player) on the PC. ASF (Advanced Streaming Format: extension "ASF") and AVI (Audio Video Interleaving: extension "AVI"), both of which are file formats of Microsoft Corporation, as well as QuickTime movie (extension "MOV") of Apple Computer Incorporation have been known as typical examples of such formats.

In the following description, one sequence of the sound and movie taken by the shooting device will be referred to as "multimedia information", and a file storing the multimedia information will be referred to as a "multimedia information file".

For storing the file, the filename must be determined. However, a user cannot assign an intended name by the shooting device because the device does not allow entry of characters. Therefore, numbers are automatically assigned in accordance with a predetermined rule. Usually, the full filename is formed of a "filename", "." and an "extension". The filename is formed of a combination of a multimedia information number, which is serially given to the multimedia information, and an attribute information symbol string indicating attributes of the multimedia information and file.

Although there are several kinds of multimedia information files such as ASF (extension "ASF"), AVI (extension "AVI") and QuickTime movie (extension "MOV"), these are representatively expressed with the extension "DAT" in this specification.

By utilizing the multimedia information number, a user can clearly determine a correspondence between the image taken by the shooting device and the full filename on the record medium. For example, a plurality of images, which are prepared by reducing or scaling down representative images (e.g., in start positions) among those recorded on the record medium, are displayed on a common screen, and the multimedia information number is overlaid, e.g., on an upper right corner of each representative image. Thereby, the multimedia information number of the taken image can be determined. When the filenames on the record medium are displayed in a list form according to the user's request, the multimedia information numbers, which are components of the filenames, are listed. Therefore, the user can determine the correspondence between the files and images.

In general, the multimedia information file includes a multimedia information body and a control information part for controlling the multimedia information. The multimedia information body stores packets of data, each of which has an appropriate length, and corresponds to each medium of sound or movie. Each packet contains control information independent of the other packets in addition to various medium data.

As the control information for controlling the multimedia information, the foregoing ASF stores information such as a file ID (IDentification), a file size and a file encoding method in a leading portion (header) of the file. Also, information such as index information for random access to the data body is stored in a rear part (footer) of the file. The control information for each packet contains a medium identifier indicating the type of medium of data contained in the packet as well as a time stamp indicating a reproduction time of data, a length of the packet and others.

For coupling items or pieces of the multimedia information formed of the above files on the shooting device, such a manner cannot be employed that only the files or only the data bodies in the files are simply coupled together. Thus, processing is required for rewriting the control information such as the reproduction time and the number of packets to match with the result of coupling, and additionally the time stamp of each packet must be rewritten.

For example, it is now assumed that a file B of a reproduction time of 3 minutes is to be coupled to an end of a file A of a reproduction time of 2 minutes. For example, it is assumed that packets of file A bear time stamps of 0" (0 seconds), 10", 20", ··· , 1'50" (1 minute 50 seconds) between 0" and 1'50" spaced by 10 seconds from each other, respectively, and packets of file B bear the time stamps of 0", 10", 20", ···, 2'50" between 0" and 2'50" spaced by 10 seconds from each other.

For coupling these two files A and B, it is necessary to reassign (rewrite) the time stamps of the packets included in file B to 2'0", 2'10", 2'20", ···, 4'50" by adding 2 minutes to the original time stamps, respectively.

For dividing the multimedia information on the shooting device, rewriting of the time stamp of each packet is required in addition to the rewriting of the control information. For example, it is now assumed that a file C of a reproduction time of 5 minutes is to be divided at a position of 3 minutes from the start into first and second halves.

The packets in the first half bear the time stamps of 0'0", 10", 20", ···, 2'50", which start from 0 seconds. Therefore, it is not necessary to change these times stamps. However, the packets in the second half bear the time stamps of 3'0", 3'10", 3'20", ···, 4'50", respectively, which start from the divided position. Therefore, the time stamps must be rewritten into the time stamps of 0'0", 10", 20", ··· , 1'50" starting from 0 seconds.

If a shooting device having a CPU (Central Processing Unit) of a low performance is used for such rewriting of the time stamps, it takes a very long time. Therefore, in the case where editing such as coupling and division is requested, processing is not effected on the multimedia information file itself, which is the target for editing, but is generally performed to prepare and utilize edit information file describing information, which designates the multimedia information files to be used and the portions thereof to be reproduced as well as the order of such reproduction (and will be referred to as "file reproduction information" hereinafter).

For example, in the ASF described above, a metadata file called "ASX" is defined as the edit information file. By using this ASX file, setting for continuously reproducing multiple files can be achieved. It is also possible to designate the start point for reproduction and the reproduction time length for each file to be produced. In this specification, the filename extension of the edit information file is defined as "INF".

By utilizing this edit information file, editing such as coupling and division can be performed easily. For example, when files A and B are to be coupled, the edit information file describing the file reproduction information of the contents "file B is to be reproduced entirely after entirely reproducing file A" is prepared, and this edit information file is selected in the reproduction operation so that the images which are the result of coupling of files A and B can be reproduced.

For example, when file C is to be divided, such an edit information file is prepared that describes file reproduction information to the effect that a portion from the start of file C to the divided position is to be reproduced, and also such an edit information file is prepared that describes file reproduction information to the effect that a portion of file C from the divided position to the final end is to be reproduced. In the file reproducing operation, either of such edit information files is selected so that the images prepared by dividing file C can be reproduced.

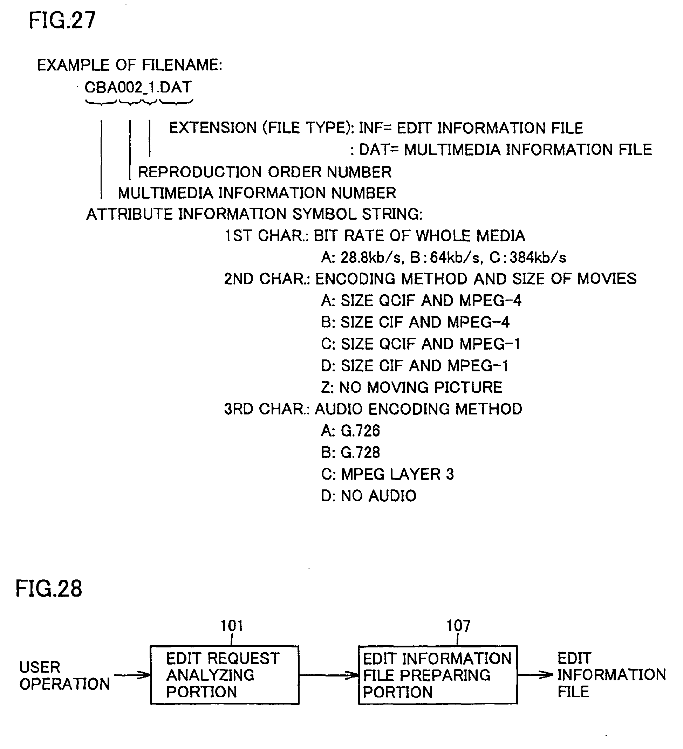

Referring to Fig. 28, the conventional file managing device includes an edit request analyzing portion 101 for analyzing a result of user's operation to determine a file to be edited and a manner of editing to be performed, and an edit information file preparing portion 107, which is connected to edit request analyzing portion 101 for preparing the edit information file describing the file reproduction information allowing reproduction in accordance with the edit manner request by the user.

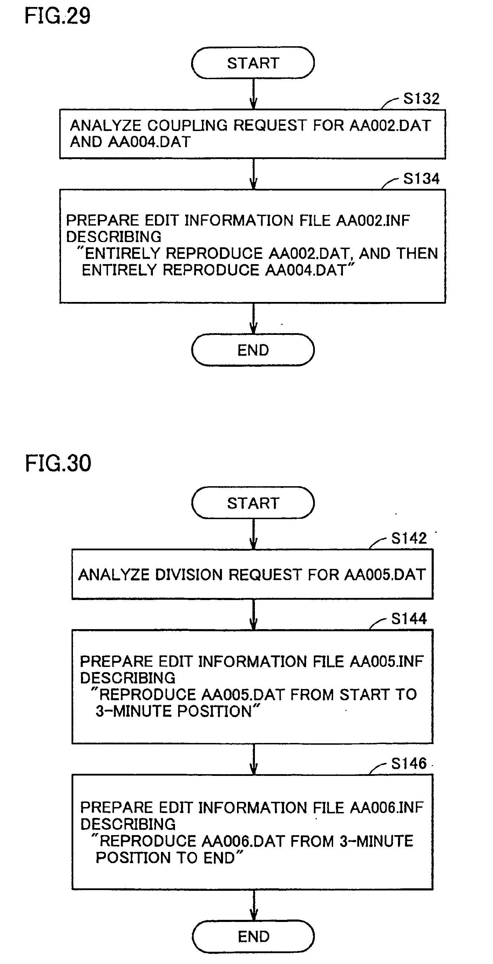

Referring to Fig. 29, description will now be given on an example of the processing of coupling multimedia information by a conventional file managing device. It is now assumed that five multimedia information files AA001.DAT - AA005.DAT are present in a directory DIR. It is also assumed that the user requests coupling of files AA002.DAT and AA004.DAT among these files. Edit request analyzing portion 101 analyzes the user's coupling request for AA002.DAT and AA004.DAT (S132). Edit information file preparing portion 107 prepares edit information file AA002.INF describing the file reproduction information of the contents "AA004.DAT is to be reproduced entirely after entirely reproducing AA002.DAT" based on the result of analysis by edit request analyzing portion 101 (S134).

Referring to Fig. 30, description will now be given on an example of the processing of dividing multimedia information. It is now assumed that the multimedia information contained in AA005.DAT is to be divided at a position of 3 minutes from the start. Edit request analyzing portion 101 analyzes the division request for AA005.DAT by the user (S142). Based on the result of analysis by edit request analyzing portion 101, edit information file preparing portion 107 prepares edit information file AA005.INF describing the file reproduction information of the contents "AA005.DAT is to be reproduced from the start to the position of 3 minutes" (S144). Based on the result of analysis by edit request analyzing portion 101, edit information file preparing portion 107 prepares file reproduction information AA006.INF of the contents "AA005.DAT is to be produced from the position of 3 minutes to the final end" (S146).

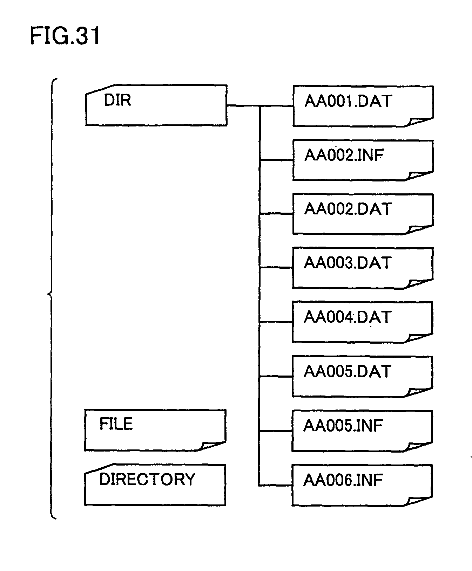

Referring to Fig. 31, description will now be given on a structure of directory DIR, which is formed after coupling and dividing the multimedia information, in accordance with flowcharts of Figs. 29 and 30.

In directory DIR, there are five multimedia information files AA001.DAT - AA005.DAT as well as file AA002.INF prepared by the coupling processing and files AA005.INF and AA006.INF prepared by dividing processing.

If a user select edit information file AA002.INF, multimedia information including AA002.DAT and AA004.DAT coupled together is reproduced. If the user selects edit information file AA006.INF, multimedia information of a portion of file AA005.DAT following the divided position (position of 3 minutes from the start) is reproduced.

According to the conventional file managing device, however, even if a user views a list of the full filenames in the record medium, the user cannot recognize that the edit information file AA002.INF refers to multimedia information files AA002.DAT and AA004.DAT, and that edit information file AA006.INF refers to multimedia information file AA005.DAT.

Therefore, when the user intends to select only the files related to the edited multimedia information for copying it to another device (e.g., PC), the user cannot determine the file to be copied. Accordingly, all the files which are present on the record medium must be copied although only specific files are to be copied.

The present invention has been developed for overcoming the above disadvantage, and an object of the invention is to provide a file managing device, by which a user can clearly determine correspondence between edit information files and multimedia information files only by viewing full filenames.

Another object of the invention is to provide a file managing device, which allows clear determination of the multimedia information files actually forming multimedia information without describing edit information in an independent file.

JP 06059953 discloses a method for controlling input/output of virtual files arranged such that plural dividend read files are accessed and including a function for determining the access order of divided files to a virtual file name.

### Disclosure of the Invention

A file managing device according to one aspect of the present invention is defined in claim 1.

When a user views a list of files on the record medium, the user can easily determine the correspondence of the edited multimedia information with respect to the multimedia information files and the edit information files forming the multimedia information. Therefore, the user can easily select only the files related to the edited multimedia information for copying them onto a PC.

Preferably, the edit information file preparing portion prepares the edit information file for each item of multimedia.

Since one edit information file is always present for each item of multimedia information, the user can reproduce the intended multimedia information by selecting the edit information file.

More preferably, the multimedia information name determining portion includes a multimedia information number determining portion connected to the edit request analyzing portion for determining a serial number to be assigned to the edited multimedia information; a reproduction order number determining portion connected to the edit request analyzing portion and used, when the edited multimedia information is formed of the plurality of multimedia information files, for determining a reproduction order number indicating an order of reproduction of each multimedia information file; an attribute information symbol string determining portion connected to the edit request analyzing portion for determining a symbol string indicating an attribute of the multimedia information; and a filename determining portion connected to the record medium, the editing portion, the edit information file preparing portion, the multimedia information number determining portion, the reproduction order number determining portion and the attribute information symbol string determining portion for determining the full filenames of the multimedia information file and the edit information file forming the edited multimedia information based on the outputs of the multimedia information number determining portion, the reproduction order number determining portion and the attribute information symbol string determining portion.

The multimedia information file and the edit information file bear the same multimedia information number and the same attribute information symbol string. Also, the values of reproduction order numbers are determined in the order of reproduction of the multimedia information file. Therefore, it is possible to determine the correspondence between the multimedia information numbers and the edit information file forming the multimedia information as well as the reproduction order of the multimedia information files.

More preferably, the file managing device further includes a directory moving portion connected to the multimedia information name determining portion for preparing a directory corresponding to the edited multimedia information, and moving the multimedia information file and the edit information file forming the edited multimedia information to the directory.

The directory moving portion moves the multimedia information file and the edit information file forming the multimedia information to the directory independently prepared for each multimedia information. Therefore, it is possible to establish clearly the correspondence of the multimedia information with respect to the multimedia information file and the edit information file forming the same.

According to another aspect of the invention, a file managing device is defined in claim 9.

The multimedia information is formed of one multimedia information file containing the time stamp offset information. Therefore, it is not necessary to describe the edit information as another file, and therefore, it is possible to determine clearly of which multimedia information files the multimedia information is formed.

More preferably, the filename determining portion changes an extension of the full filename of the multimedia information file bearing the time stamp offset information added thereto.

A user can determine the multimedia information file, which is individually expanded, by viewing the extension of the full filename. Therefore, such a situation can be prevented that the multimedia information file subjected to the individual extending is reproduced with reproducing software incompatible with such extending.

More preferably, the multimedia information name determining portion includes a multimedia information number determining portion connected to the edit request analyzing portion for determining the serial number to be assigned to the edited multimedia information, an attribute information symbol string determining portion connected to the edit request analyzing portion for determining the symbol string indicating the attribute of the multimedia information, and a filename determining portion connected to the multimedia information number determining portion, the attribute information symbol string determining portion and the editing portion for determining the full filename of the multimedia information file forming the edited multimedia information based on the outputs of the multimedia information number determining portion and the attribute information symbol string determining portion.

The multimedia information number and the attribute information symbol string of the multimedia information file forming the multimedia information are determined in accordance with an edit request. Therefore, it is possible to determine clearly the correspondence of the multimedia information with respect to the multimedia information file forming the same.

In order that the present invention be more readily understood, specific embodiments thereof will now be described with reference to the accompanying drawings.

### Brief Description of the Drawings

Fig. 1 is a block diagram showing a schematic structure of a file managing device according to a first embodiment of the invention;
Fig. 2 shows an example of a manner of determining full filenames of a multimedia information file and an edit information file according to the first embodiment of the invention;
Fig. 3 is a flowchart showing coupling processing for multimedia information according to the first embodiment of the invention;
Fig. 4 is a flowchart of the coupling processing for multimedia information according to the first embodiment of the invention;
Fig. 5 shows an example of the coupling processing for multimedia information according to the first embodiment of the invention;
Fig. 6 is a flowchart showing dividing processing for multimedia information according to the first embodiment of the invention;
Fig. 7 is a flowchart of the dividing processing for multimedia information according to the first embodiment of the invention;
Fig. 8 shows an example of the dividing processing for multimedia information according to the first embodiment of the invention;
Fig. 9 shows an example of a directory structure after the editing processing according to the first embodiment of the invention;
Fig. 10 shows an example of processing of further coupling multimedia information prepared by the coupling according to the first embodiment of the invention;
Fig. 11 shows an example of processing of dividing multimedia information prepared by the coupling according to the first embodiment of the invention;
Fig. 12 is a flowchart of the coupling processing according to the second embodiment of the invention;
Fig. 13 is a flowchart of the coupling processing according to the second embodiment of the invention;
Fig. 14 shows an example of a directory structure after the editing processing according to the second embodiment of the invention;
Fig. 15 is a block diagram showing a schematic structure of a file managing device according to a third embodiment of the invention;
Fig. 16 is a flowchart of the coupling processing for multimedia information according to the third embodiment of the invention;
Fig. 17 is a flowchart of the coupling processing for multimedia information according to the third embodiment of the invention;
Fig. 18 shows an example of a directory structure after the editing processing according to the third embodiment of the invention;
Fig. 19 is a block diagram showing a schematic structure of a file managing device according to a fourth embodiment of the invention;
Fig. 20 shows a format of time stamp offset information according to a fourth embodiment of the invention;
Fig. 21 is a flowchart of the dividing processing for multimedia information according to the fourth embodiment of the invention;
Fig. 22 shows an example of division of the multimedia information according to the fourth embodiment of the invention;
Fig. 23 is a flow chart of the coupling processing for multimedia information according to the fourth embodiment of the invention;
Fig. 24 shows an example of coupling of the multimedia information according to the fourth embodiment of the invention;
Fig. 25 shows an example of a directory structure after editing processing according to the fourth embodiment of the invention;
Fig. 26 shows an example of a manner of determining a full filename according to filename determining rules of Exif (Exchangeable image file format) of an embodiment of the invention;
Fig. 27 shows an example of a manner of determining a full filename in the case where a character representing a shooting mode is employed in a symbol string of attribute information in the embodiment of the invention;
Fig. 28 is a block diagram showing a schematic structure of a conventional file managing device;
Fig. 29 is a flowchart of the coupling processing for multimedia information in the conventional file managing device;
Fig. 30 is a flowchart of the dividing processing for multimedia information in the conventional file managing device; and
Fig. 31 shows an example of a directory structure after the editing processing in the conventional file managing device.

### [First Embodiment]

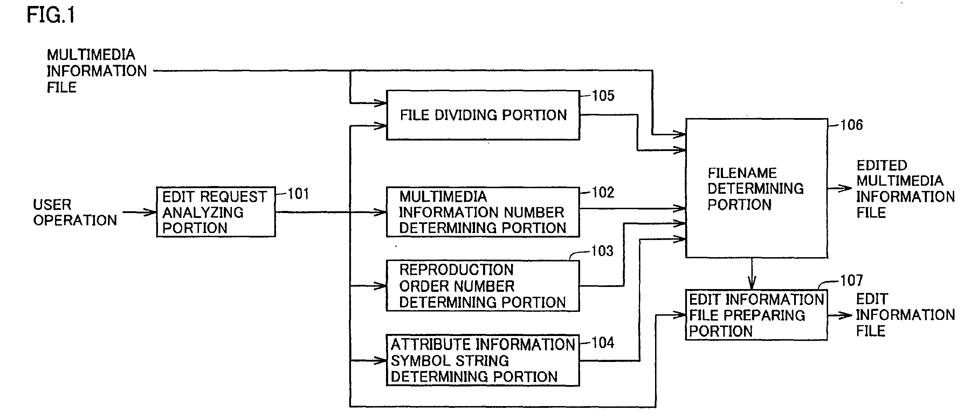

Referring to Fig. 1, a file managing device according to a first embodiment of the invention includes an edit request analyzing portion 101 for analyzing a result of a user's operation to determine a file to be edited and an intended manner of editing, a multimedia information number determining portion 102 which is connected to edit request analyzing portion 101 for determining a multimedia information number to be assigned to the edited multimedia information, a reproduction order number determining portion 103 which is connected to edit request analyzing portion 101 for determining a reproduction order number indicating an order of reproduction of each file in the case where the multimedia information is formed of a plurality of multimedia information files, an attribute information symbol string determining portion 104 which is connected to edit request analyzing portion 101 for determining an attribute information symbol string indicating attributes and others of the multimedia information and the files, and a file dividing portion 105 which is connected to edit request analyzing portion 101 and a record medium (not shown) for dividing the multimedia information and rewriting control information such as a file size, a reproduction time and others.

The file managing device further includes a filename determining portion 106 which is connected to multimedia information number determining portion 102, reproduction order number determining portion 103, attribute information symbol string determining portion 104, file dividing portion 105 and the record medium (not shown), and determines the full filename of the multimedia information file output from file dividing portion 105 or the multimedia information file recorded on the record medium based on the outputs of multimedia information number determining portion 102, reproduction order number determining portion 103 and attribute information symbol string determining portion 104, and an edit information file preparing portion 107 which is connected to filename determining portion 106 and edit request analyzing portion 101 for preparing an edit information file describing the file reproduction information related to the multimedia information file, which bears the full filename determined by the filename determining portion 106.

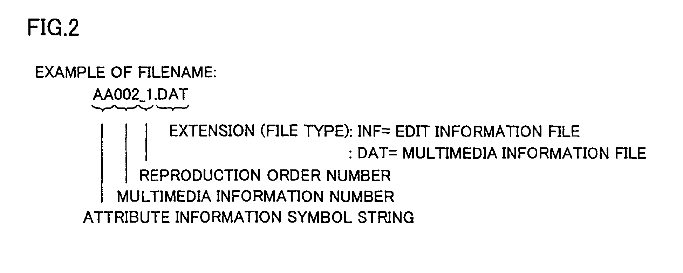

Referring to Fig. 2, description will now be given on an example of assigning the filenames to the multimedia information file and the edit information file according to the invention. Each of the full filenames of the multimedia information file and the edit information file is formed of a "filename", "." and an "extension". The filename is formed of "attribute information symbol string", "multimedia information number" and "reproduction order number".

The multimedia information numbers are serial numbers, which are determined by the multimedia information number determining portion 102, and are allocated to the taken images. Based on the serial number thus assigned, a user can determine correspondences between taken images and files on the record medium.

The reproducing order number is determined by reproduction order number determining portion 103, and indicates the order of reproduction of the multimedia information files in the multimedia information formed of the plurality of multimedia information files. In this example, the reproduction order is represented by numbers such as "_1" and "_2", however, the reproduction order may be represented by alphabets such as "_A", "_B", "_C", ··· , and "_Z", or may be represented by both the numbers and alphabets such as "_1", "_2",···, "_9", "_A","_B",···, "_Z".

As can be seen, e.g., from "_1" and "_2", a prefix "_" is added for distinguishing the multimedia information number and the reproduction order number from each other. However, this symbol may be replaced with another symbol, or may be eliminated. Further, in such a case that the file coupling processing has not been performed, and more generally, in such a case that the multimedia information is formed of one multimedia information file, the reproduction order number may be eliminated, or the number (i.e., "_1" in this embodiment) indicating the first may be used as the reproduction order number.

The attribute information symbol string is determined by attribute information symbol string determining portion 104, and is used for adding the attributes of the multimedia information and file to the filename. As can be seen from "AA002_1.DAT" in Fig. 2, the filename is formed of the attribute information symbol string, multimedia information number and reproduction order number arranged in this order. However, the order is not restricted to the above, and the number of characters representing each item of information is not restricted to that in Fig. 2.

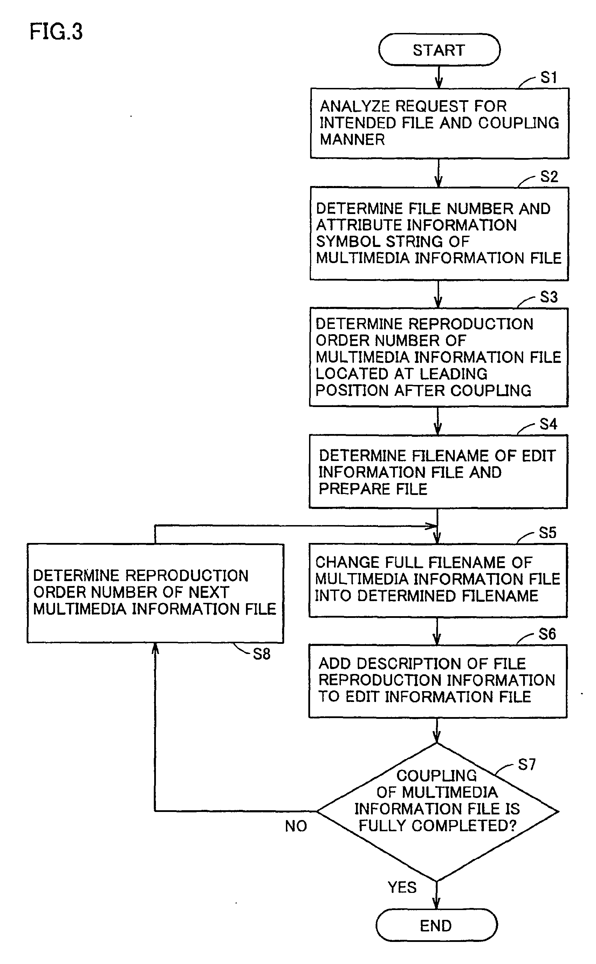

Referring to Fig. 3, description will now be given on the processing of coupling the multimedia information files. Edit request analyzing portion 101 analyzes the user's request to determine the file to be coupled and the coupling manner (S1). Multimedia information number determining portion 102 and attribute information symbol string determining portion 104 determine the multimedia information number and the attribute information symbol string, which will be used in the file forming the multimedia information prepared by the coupling (S2).

Reproduction order number determining portion 103 determines the reproduction order number of the multimedia information file located at the leading position after the coupling (S3). Filename determining portion 106 determines the filename of the edit information file (S4). Filename determining portion 106 changes the full filename of the multimedia information file into the filename thus determined (S5). Edit information file preparing portion 107 adds the description of file reproduction information to the edit information file (S6).

It is determined whether the file coupling is fully completed or not (S7). If the file coupling is not completed (NO in S7), reproduction order number determining portion 103 determines the reproduction order number of the multimedia information file in the next position (S8). Thereafter, processing in steps S5 and S6 is executed. If the file coupling is already completed (YES in S7), the processing ends.

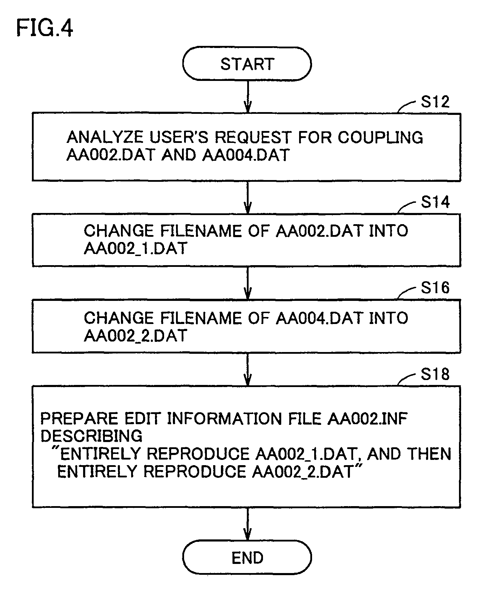

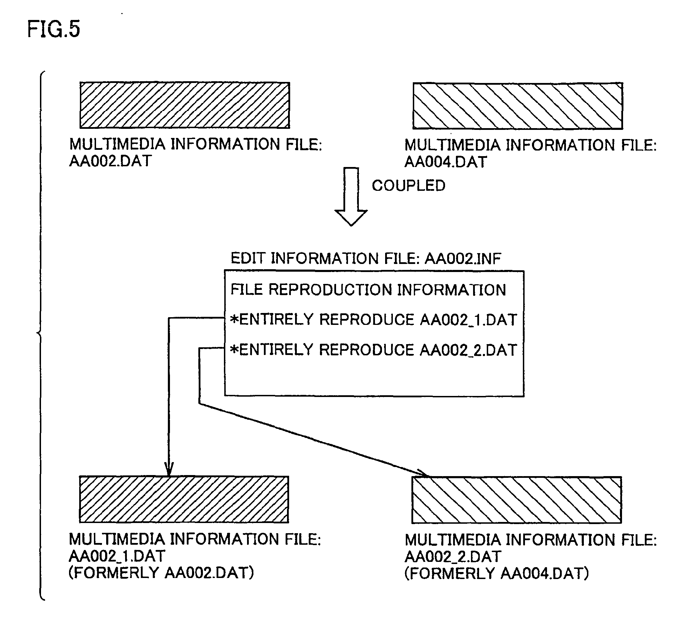

Referring to Figs. 4 and 5, description will now be given on an example of the coupling processing for multimedia information by the file managing device according to the first embodiment. It is assumed that five multimedia information files AA001.DAT - AA005.DAT are present in directory DIR. It is also assumed that the user requests the coupling of files AA002.DAT and AA004.DAT. Edit request analyzing portion 101 analyzes the user's request for coupling AA002.DAT and AA004.DAT (S12).

Filename determining portion 106 changes the full filename of AA002.DAT into AA002_1.DAT (S14). Filename determining portion 106 also changes the full filename of AA004.DAT into AA002_2.DAT (S16). In steps S14 and S16, only the full filenames are changed, and contents are not changed.

Edit information file preparing portion 107 prepares the edit information file named "AA002.INF", which inherits the multimedia information number of AA002.DAT (S18). Edit information file AA002.INF describes the file reproduction information of the contents "file AA002_1.DAT is to be reproduced entirely, and then file AA002_2.DAT is to be reproduced entirely". In this example, the inherited multimedia information number is "002", which is located at the forward portion after the coupling. However, the full filename may be determined to inherit a younger one between the multimedia information numbers of the files to be coupled.

As a result of coupling of AA002.DAT and AA004.DAT, three files AA002.INF, AA002_1.DAT and AA002_2.DAT are produced. The full filenames of these three files have the common multimedia information number. Therefore, the user can know that these three files form one item of multimedia information 002 by viewing a list of the full filenames. From the reproduction order numbers ("_1" and "_2" in this example) following the multimedia information numbers, the user can clearly understand that AA002_2.DAT is to be reproduced after AA002_1.DAT is reproduced.

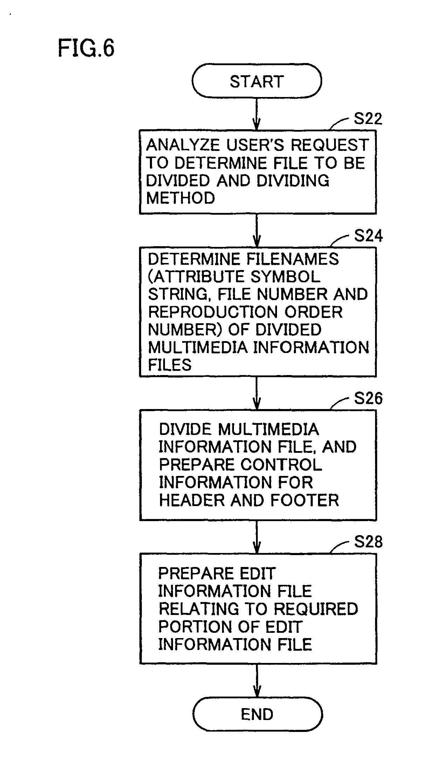

Referring to Fig. 6, description will be given on the processing of dividing the multimedia information file. Edit request analyzing portion 101 analyzes the user's request to determine the file to be divided as well as the dividing method (S22). Filename determining portion 106 determines the filenames to be assigned to the multimedia information files after division (S24). The filename is uniquely determined by determining the attribute information symbol string, the multimedia information number and the reproduction order number.

File dividing portion 105 divides the multimedia information file at the dividing position, and rewrites the control information to be written into the header and footer of each file (S26). Edit information file preparing portion 107 prepares the edit information file relating to the latter half prepared by division (S28), and then the processing ends.

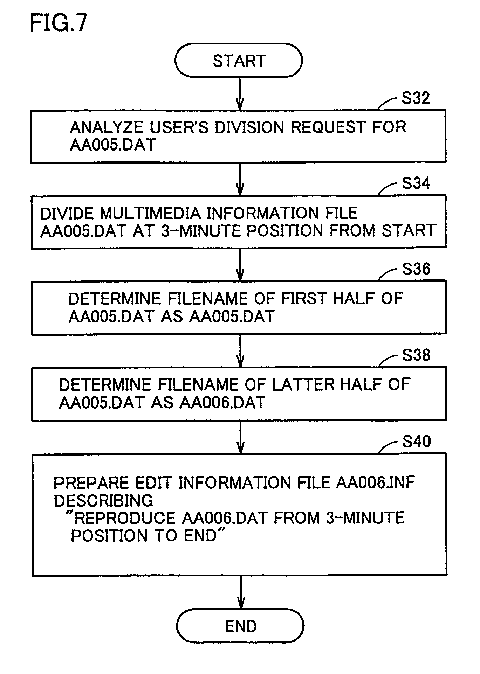

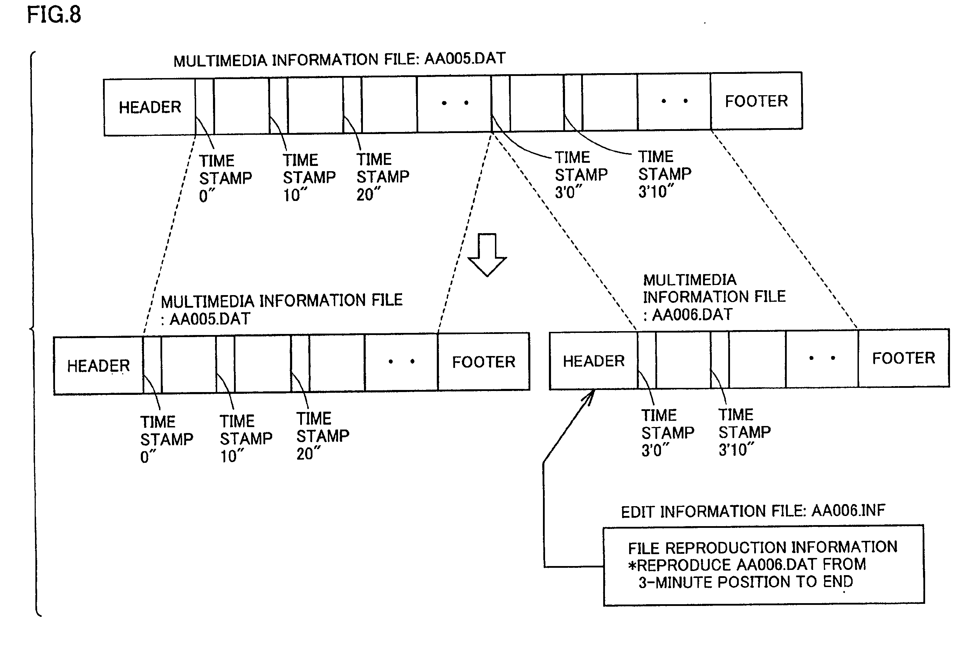

Referring to Figs. 7 and 8, description will now be given on an example of the multimedia information dividing processing. It is now assumed that the multimedia information contained in AA005.DAT is to be divided at a position of 3 minutes from the start. Edit request analyzing portion 101 analyzes the user's division request for AA005.DAT (S32). File dividing portion 105 divides multimedia information file AA005.DAT at the position of 3 minutes from the start based on the analysis result of edit request analyzing portion 101 (S34).

Filename determining portion 106 determines the full filename of the divided first half of the multimedia information as "AA005.DAT" (S36), and also determines the second half as "AA006.DAT" (S38). On the record medium, a file bearing the multimedia information number of "006" is not present. Therefore, such a multimedia information number is expressed as an "empty number".

Control information such as a file size and a reproduction time, which are described in the header and footer of each of the divided files AA005.DAT and AA006.DAT, are reset to correct values.

A time stamp starting from 0 seconds was assigned to the packet of the first half file AA005.DAT. However, a time stamp starting from 3 minutes was assigned to the second half file AA006.DAT. For correcting the time stamp of file AA006.DAT, edit information file preparing portion 107 prepares edit information file AA006.INF (S40). Edit information file AA006.INF describes the file reproduction information to that effect that reproduction is to be performed from the position of 3 minutes, corresponding to the divided position of multimedia information file AA006.DAT, to the file end.

In this example, the full filename of edit information file AA005.INF of the first half is inherited from the filename of file AA005.DAT before the division, and only edit information file AA006.INF of the second half bears the full filename corresponding to the empty multimedia information number. However, full filenames corresponding to the empty multimedia information numbers may be assigned to both the first and second halves, respectively.

A DOS file system can store a file creation time in addition to the full filename. The edit information file, which is prepared by coupling or division, stores the information of the edit time, but the creation time information of the multimedia information file, which was processed only to change the full filename, is not updated.

In addition to the creation time information of the edit information file, it is also possible to change the file creation time information of the multimedia information file having the changed full filename at the time of editing. Thereby, the edit information file and the corresponding multimedia information file can have the unified creation time. Therefore, the correspondence can be clearly determined based on not only the filename but also the file creation time.

For indicating the time of creation of the multimedia information in the file, such a manner may be employed that the creation time of the multimedia information file is not updated at the time of editing.

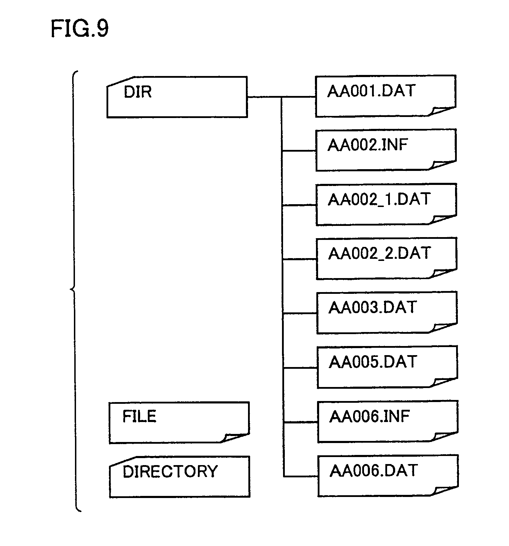

Referring to Fig. 9, description will be given on the structure of directory DIR, which is formed after coupling or dividing processing for multimedia information in accordance with flowcharts of Figs. 4 and 7.

Before the coupling and dividing processing, five multimedia information files AA001.DAT - AA005.DAT are present in directory DIR. After the coupling of files AA002.DAT and AA004.DAT, edit information file AA002.INF is prepared, AA002.DAT is changed into AA002_1.DAT, and AA004.DAT is changed into AA002_2.DAT.

After multimedia information file AA005.DAT is divided into AA005.DAT and AA006.DAT, edit information file AA006.INF is prepared.

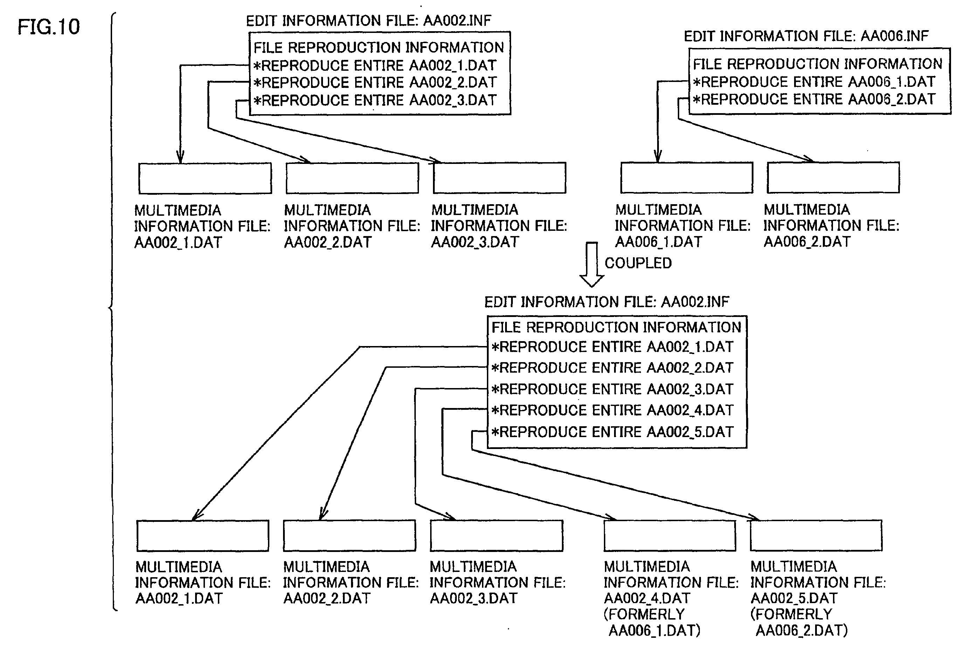

Referring to Fig. 10, description will now be given on the processing of further coupling the multimedia information prepared by the coupling. The multimedia information prepared by the coupling is formed of edit information file AA002.INF and multimedia information files AA002_1.DAT, AA002_2.DAT and AA002_3.DAT. The other multimedia information prepared by the coupling is formed of edit information file AA006.INF and multimedia information files AA006_1.DAT and AA006_2.DAT.

When coupling these items of multimedia information, multimedia information number "002" is taken over. More specifically, the full filenames of files AA002_1.DAT, AA002_2.DAT and AA002_3.DAT do not change, and the full filenames of files AA006_1.DAT and AA006_2.DAT are changed into AA002_4.DAT and AA002_5.DAT, respectively.

Edit information file AA002.INF, which is newly prepared, describes the file reproduction information representing that the files are to be reproduced in the order of AA002_1.DAT, AA002_2.DAT, AA002_3.DAT, AA002_4.DAT and AA002_5.DAT.

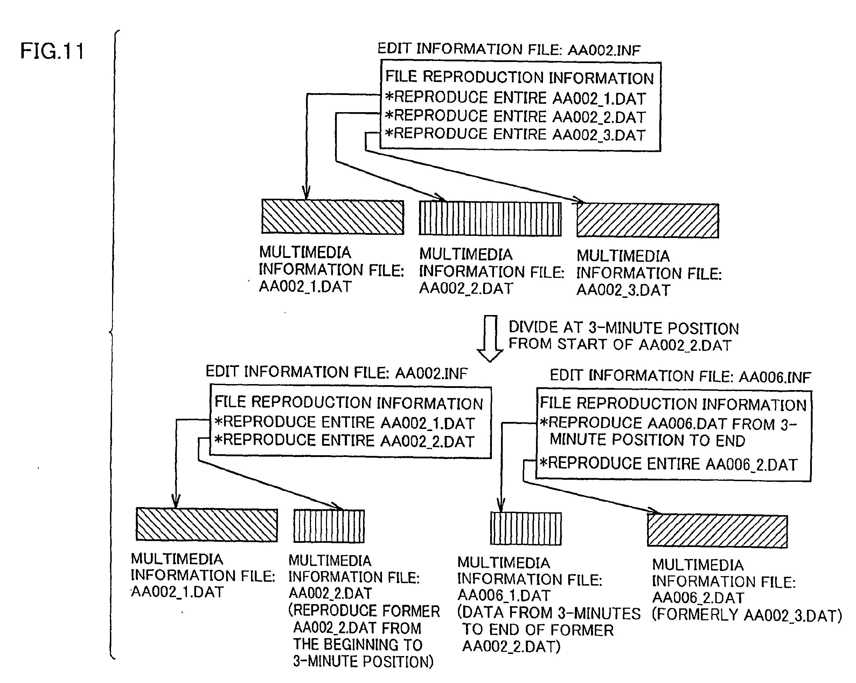

Referring to Fig. 11, description will now be given on the processing of dividing the multimedia information prepared by the coupling. The multimedia information prepared by the coupling is formed of edit information file AA002.INF as well as multimedia information files AA002_1.DAT, AA002_2.DAT and AA002_3.DAT. It is now assumed that a user requests the division at a position of 3 minutes from the start of file AA002_2.DAT.

Multimedia information file AA002_2.DAT is divided. The first half (data from the start to the position of 3 minutes) bears the same full filename "AA002_2.DAT" as the original full filename. The latter half (data from the position of 3 minutes to the end) bears the full filename "AA006_1.DAT" corresponding to the empty multimedia information number. The full filename of file AA002_3.DAT is changed into AA006_2.DAT.

Edit information file AA002.INF describes the file reproduction information representing that reproduction is to be performed in the order of AA002_1.DAT and AA002_2.DAT. For edit information file AA006.INF, which is newly prepared, describes the file reproduction information representing that the reproduction is to be performed in the order of the portion of file AA002_1.DAT from the divided position to the end as well as the whole file AA002_2.DAT.

When coupling the files, different coupling requests may be issued for the same file. For example, coupling of multimedia information file AA002.DAT and AA004.DAT may be requested simultaneously with the coupling of multimedia information files AA003.DAT and AA004.DAT. In this case, coupling requests for file AA004.DAT overlap with each other. Therefore, a duplicate of file AA004.DAT is prepared for complying with both the coupling requests.

More specifically, the full filenames of AA002.DAT and AA004.DAT are changed into AA002_1.DAT and AA002_2.DAT, respectively, and edit information file AA002.INF is prepared. Thereafter, the full filename of AA003.DAT is changed into AA003_1.DAT, and a duplicate of the file formerly bearing the full filename of AA004.DAT is prepared, and the full filename thereof is changed into AA003_2.DAT. Then, edit information file AA003.INF is prepared.

By the above processing, the editing processing can be performed even if overlapping of files occurs in the coupling operation.

According to the first embodiment, as described above, the user can easily understand the correspondence of the edited multimedia information with respect to the multimedia information file and the edit information file forming the multimedia information when the user views the list of files in the record medium. Therefore, the user can easily select only the files related to the edited multimedia information , and can copy them onto the PC.

Further, the multimedia information file and the edit information file bear the same multimedia information number and the attribute information symbol string. Also, the values of reproduction order numbers are determined in the order of reproduction of the multimedia information files. Therefore, it is possible to determine the correspondence of the multimedia information with respect to the multimedia information number and the edit information file forming the same, and it is also possible to clarify the reproduction order of the multimedia information.

### [Second Embodiment]

A file managing device according to a second embodiment of the invention employ a hardware structure similar to that of the file managing device according to the first embodiment. Therefore, specific description thereof is not repeated.

In this embodiment, an edit information file is present even if multimedia information is not subjected to the editing processing such as coupling or division.

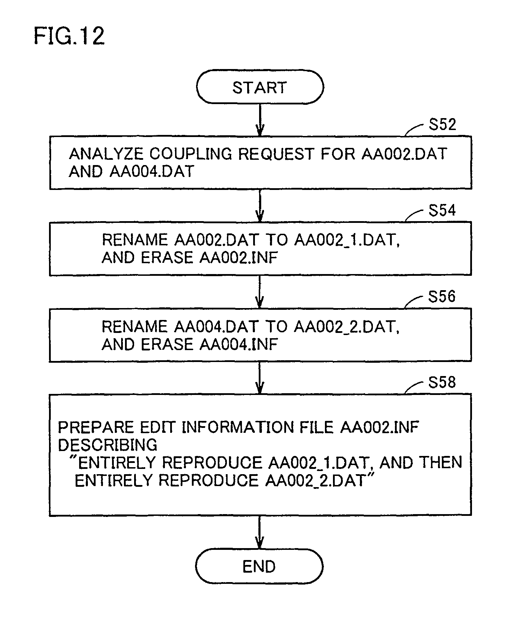

Referring to Fig. 12, description will now be given on an example of processing of coupling multimedia information by the file managing device according to the second embodiment. It is assumed that five multimedia information files AA001.DAT - AA005.DAT and corresponding files AA00 1.INF - AA005.INF are present in directory DIR. It is also assumed that a user requests coupling of files AA002.DAT and AA004.DAT. Edit request analyzing portion 101 analyzes the user's request for coupling of AA002.DAT and AA004.DAT (S52).

Filename determining portion 106 changes the full filename AA002.DAT into AA002_1.DAT, and erases file AA002.INF (S54). Further, filename determining portion 106 changes the full filename AA004.DAT into AA002_2.DAT, and erases file AA004.INF (S56). Edit information file preparing portion 107 prepares new edit information file AA002.INF (S58). Edit information file AA002.INF describes the file reproduction information of the contents "file AA002_1.DAT is to be reproduced entirely, and thereafter file AA002_2.DAT is to be reproduced entirely".

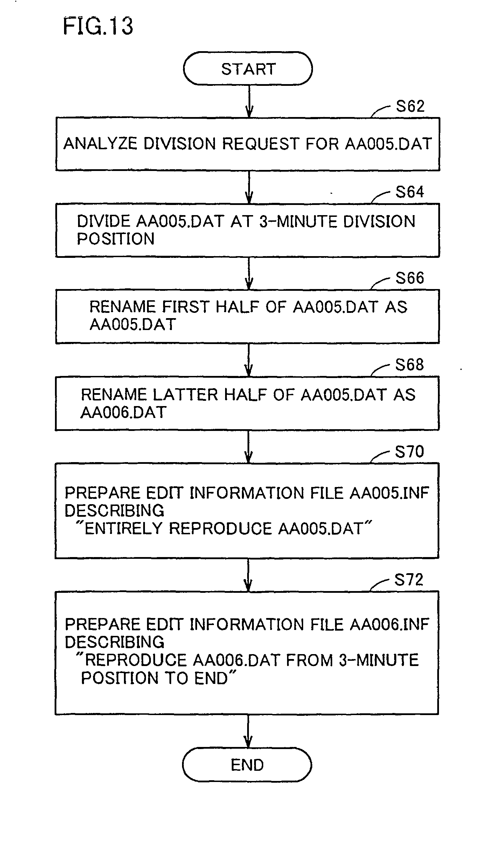

Referring to Fig. 13, an example of processing of dividing the multimedia information will now be described. It is assumed that the multimedia information contained in AA005.DAT is to be divided at the position of 3 minutes from the start. Edit request analyzing portion 101 analyzes the user's division request for AA005.DAT (S62). File dividing portion 105 divides multimedia information file AA005.DAT at the position of 3 minutes from the start based on the analysis result of edit request analyzing portion 101 (S64).

Filename determining portion 106 assigns the full filename "AA005.DAT" to the first half of the divided multimedia information (S66), and also gives the full filename "AA006.DAT" to the latter half (S68).

Edit information file preparing portion 107 prepares edit information file AA005.INF (S70). Edit information file AA005.INF describes the file reproduction information to the effect that multimedia information file AA005.DAT is to be reproduced entirely.

Time stamps starting from 0 seconds are assigned to the packets of the first half file AA005.DAT, respectively. In contrast to this, time stamps starting from 3 minutes are assigned to the packets of the latter half file AA006.DAT, respectively. Therefore, edit information file preparing portion 107 prepares edit information file AA006.INF for correcting the time stamp of file AA006.DAT (S72). Edit information file AA006.INF describes the file reproduction information to the effect that the file is to be reproduced from 3 minutes, i.e., the time of divided position of multimedia information file AA006.DAT to the end.

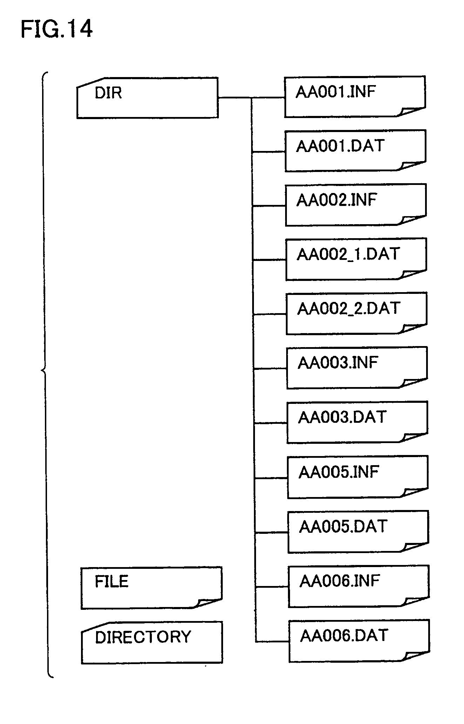

Referring to Fig. 14, description will now be given on the structure of directory DIR, which is formed after coupling and dividing the multimedia information, in accordance with flowcharts of Figs. 12 and 13.

Before the coupling processing and dividing processing, five multimedia information files AA00 1.DAT - AA005.DAT as well as five edit information files AA001.INF - AA005.INF were present in directory DIR. After the coupling processing of files AA002.DAT and AA004.DAT, the full filenames "AA002.DAT" and "AA004.DAT" are changed into "AA002_1.DAT" and "AA002_2.DAT", respectively, and file AA004.INF is erased. Further, files AA006.DAT and AA006.INF are newly prepared by the file dividing processing.

According to this embodiment, as already described, the edit information file is prepared even if neither the coupling nor the division has been effected on the multimedia information. Therefore, it is not necessary for reproducing the multimedia information to perform complicated operations, and more specifically the operations of selecting the file having the extension of the multimedia information files in some cases, and selecting the file having the extension of the edit information file in other cases. In any case, the file having the extension of the edit information file is selected for reproducing the intended multimedia information so that the required operations can be simple.

### [Third embodiment]

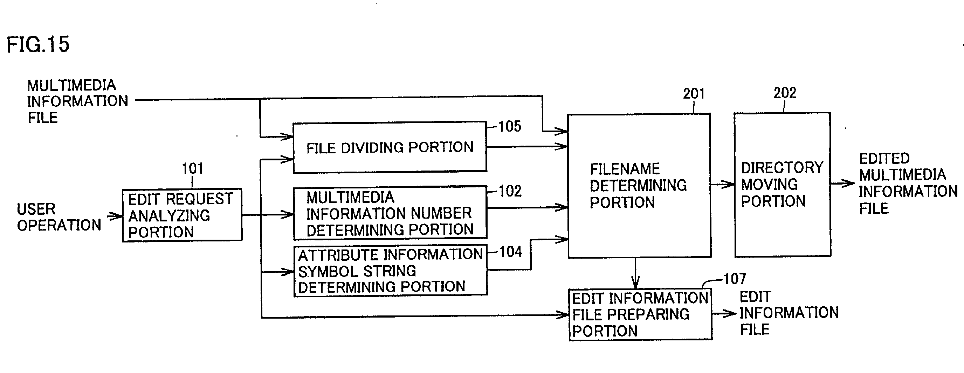

Referring to Fig. 15, a file managing device according to a third embodiment of the invention includes edit request analyzing portion 101 for analyzing a result of a user's operation to determine a file to be edited and an intended manner of editing, multimedia information number determining portion 102 which is connected to edit request analyzing portion 101 for determining a multimedia information number to be assigned to the edited multimedia information, attribute information symbol string determining portion 104 which is connected to edit request analyzing portion 101 for determining an attribute information symbol string indicating attributes and others of the multimedia information and the files, and file dividing portion 105 which is connected to edit request analyzing portion 101 and a record medium (not shown) for dividing the multimedia information and rewriting control information such as a file size, a reproduction time and others.

The file managing device further includes a filename determining portion 201 which is connected to multimedia information number determining portion 102, attribute information symbol string determining portion 104, file dividing portion 105 and the record medium (not shown), and determines the full filename of the multimedia information file output from file dividing portion 105 or the multimedia information file recorded on the record medium based on the outputs of multimedia information number determining portion 102 and attribute information symbol string determining portion 104, edit information file preparing portion 107 which is connected to filename determining portion 201 and edit request analyzing portion 101 for preparing an edit information file describing the file reproduction information related to the multimedia information file, which bears the full filename determined by the filename determining portion 201, and a directory moving portion 202 which is connected to filename determining portion 201 for producing a directory storing the files, and moving the files prepared by the coupling and division into the directory thus produced.

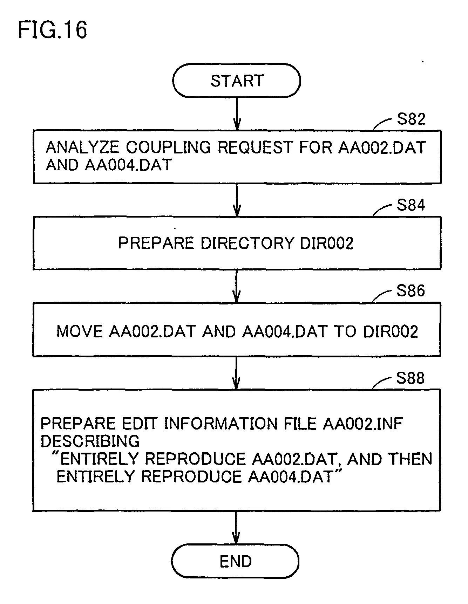

Referring to Fig. 16, description will now be given on an example of the coupling processing for multimedia information by the file managing device according to the third embodiment. It is assumed that five multimedia information files AA001.DAT - AA005.DAT are present in directory DIR. It is also assumed that the user requests the coupling of files AA002.DAT and AA004.DAT. Edit request analyzing portion 101 analyzes the user's request for coupling AA002.DAT and AA004.DAT (S82).

Directory moving portion 202 prepares a new directory, and assigns a directory name "DIR002" taking over multimedia information number "002" to the new directory (S84). Directory moving portion 202 moves multimedia information files AA002.DAT and AA004.DAT into the new directory DIR002 thus prepared (S86).

Filename determining portion 201 determines the full filename of the edit information file. A full filename "AA002.INF", which contains the same filename as the multimedia information file AA002.DAT located at the leading position in directory DIR002, but is different in extension therefrom, is employed as the full filename of the edit information file. Edit information file preparing portion 107 prepares the edit file bearing the full filename "AA002.INF" determined by filename determining portion 201 (S88). This file describes the information to the effect that file AA004.DAT is to be reproduced entirely after entirely reproducing file AA002.DAT.

Through the foregoing processing, the three files forming the multimedia information, which was prepared by coupling the files, are located in the same directory. Therefore, the fact that multimedia information number 002 is formed of the three files can be clearly shown to the user.

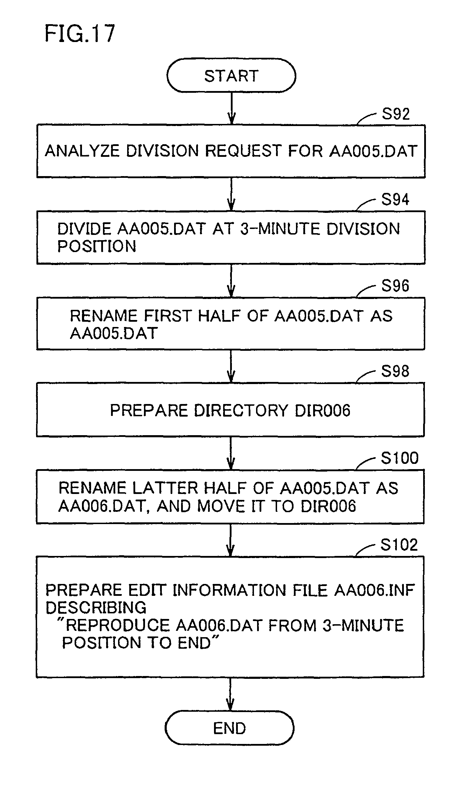

Referring to Fig. 17, description will now be given on an example of processing of dividing the multimedia information. In this example, description will be given on the case where the multimedia information contained in AA005.DAT is divided at a position of 3 minutes from the start.

Edit request analyzing portion 101 analyzes the user's request for dividing AA005.DAT (S92). File dividing portion 105 divides multimedia information file AA005.DAT at the position of 3 minutes from the start (S94).

Filename determining portion 201 determines "AA005.DAT" as the full filename of the divided first half of multimedia information (S96). Directory moving portion 202 prepares a new directory DIR006 (S98).

Filename determining portion 201 determines "AA006.DAT" as the full filename of the divided latter half of multimedia information, and directory moving portion 202 moves file AA006.DAT into directory DIR006 (S100). Filename determining portion 201 resets the control information described in the header and footer of each of files AA005.DAT and AA006.DAT to correct values.

The time stamp, which is assigned to each packet of file AA005.DAT corresponding to the first half of multimedia information, is already set to a correct value. However, the time stamp, which is assigned to each packet of file AA006.DAT corresponding to the latter half of multimedia information, has been set to a value starting from the time (3 minutes) of the divided position. For correcting this, edit information file preparing portion 107 prepares edit information file AA006.INF in directory DIR006 (S102). File AA006.INF describes the file reproduction information of the contents "multimedia information file AA006.DAT is to be reproduced from the divided position to the file end".

The foregoing processing produces directory DIR006 accommodating multimedia information file AA006.DAT and edit information file AA006.INF, which form the latter half of divided multimedia information. Therefore, the user can clearly understand that the multimedia information corresponding to multimedia information number 006 is formed of the two files.

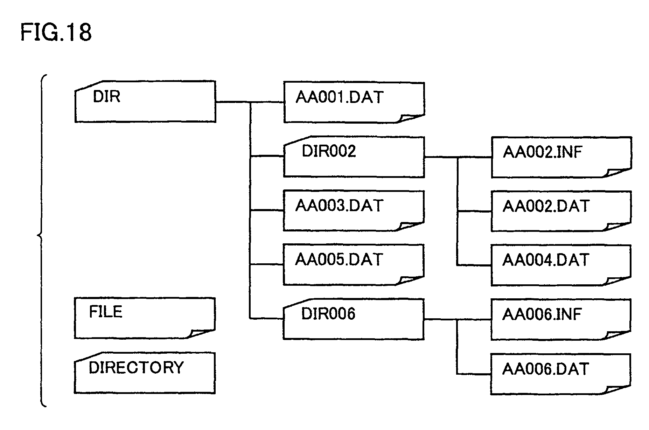

Referring to Fig. 18, description will now be given on the structure of directory DIR, which is formed after performing the coupling and dividing processing for multimedia information in accordance with the flowcharts of Figs. 16 and 17.

Before performing the coupling and dividing processing, five multimedia information files AA001.DAT - AA005.DAT were present in directory DIR. After coupling files AA002.DAT and AA004.DAT, directory DIR002 is formed, and files AA002.INF, AA002.DAT and AA004.DAT subjected to the coupling are formed in directory DIR002.

After dividing file AA005.DAT, directory DIR006 is prepared, and files AA006.INF and AA006.DAT corresponding to the latter half of divided multimedia information are accommodated in directory DIR006.

According to the third embodiment, as described above, the multimedia information file and the edit information file forming the multimedia information move to the directory independently created for each multimedia information. Therefore, it is possible to determine clearly the correspondence of the multimedia information with respect to the multimedia information file and the edit information file forming the same.

### [Fourth Embodiment]

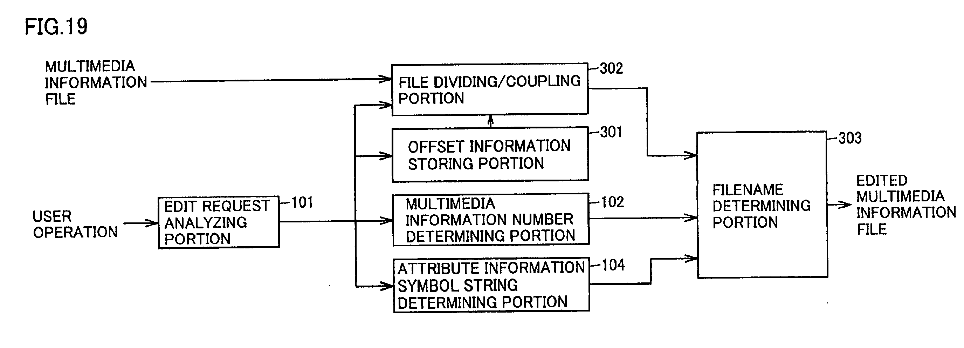

Referring to Fig. 19, a file managing device according to a fourth embodiment of the invention includes edit request analyzing portion 101 for analyzing a result of a user's operation to determine a file to be edited and an intended manner of editing, multimedia information number determining portion 102 which is connected to edit request analyzing portion 101 for determining a multimedia information number to be assigned to the edited multimedia information, attribute information symbol string determining portion 104 which is connected to edit request analyzing portion 101 for determining an attribute information symbol string indicating attributes and others of the multimedia information and the files, and an offset information describing portion 301 which is connected to edit request analyzing portion 101 for assigning time stamp offset information used for correcting the time stamp of the divided or coupled multimedia information file to a control information storing portion of the multimedia information file.

The file managing device further includes a file dividing/coupling portion 302 which is connected to offset information describing portion 301 and the record medium (not shown) for dividing or coupling the multimedia information file recorded on the record medium, and thereby producing a uniquely extended multimedia information file, and a filename determining portion 303 which is connected to file dividing/coupling portion 302, multimedia information number determining portion 102 and attribute information symbol string determining portion 104 for determining the full filename of the multimedia information file output from file dividing/coupling portion 302 based on the outputs of multimedia information number determining portion 102 and attribute information symbol string determining portion 104.

In this embodiment, the time stamp offset information is stored in the control information storing portion of the multimedia information file.

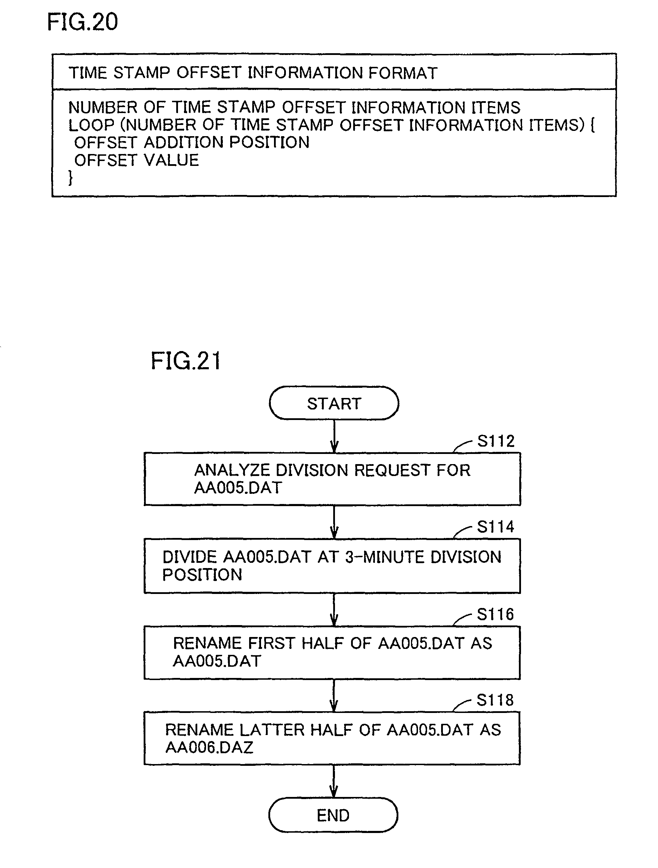

Referring to Fig. 20, description will now be given on an example of the format of time stamp offset information. The time stamp offset information is formed of a number of time stamp offset information items, and pairs of an offset addition position and an offset value. The pairs of offset addition position and offset value, which are prepared, are equal in number to the number of time stamp offset information items.

The time stamp offset information item number corresponds to the number of kinds of the added offset values. The offset addition position indicates the position of the time stamp of the packet, in which the addition of the offset value starts. The offset addition position may correspond to the number of bytes counted from the start of the file, or may be the number of packets.

The offset value indicates the value of offset added to the time stamp. The offset value may take either positive or negative value.

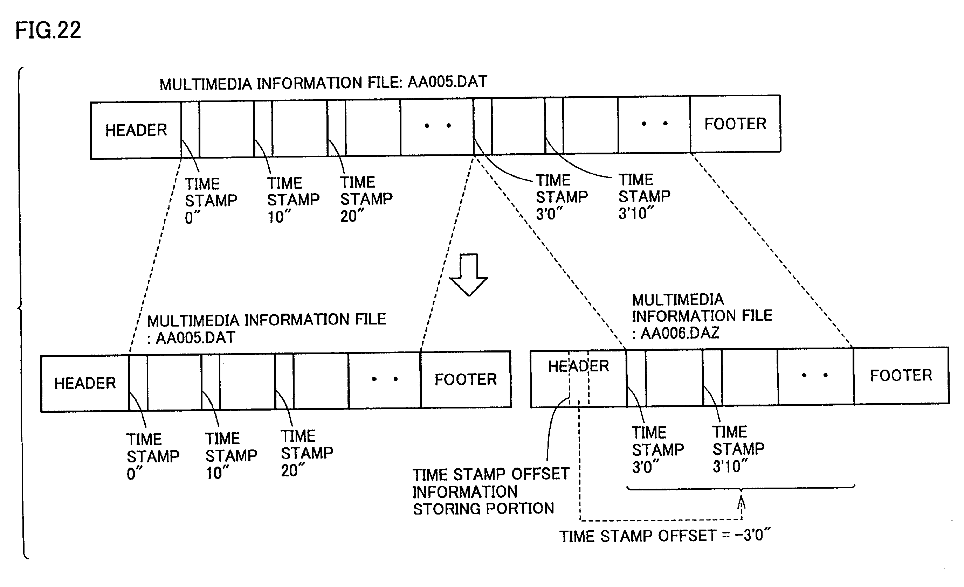

Referring to Figs. 21 and 22, description will now be given on an example of the dividing processing for multimedia information by the file managing device according to the fourth embodiment. It is assumed that five multimedia information files AA001.DAT - AA005.DAT are present in directory DIR. In the following description, it is assumed that the multimedia information contained in AA005.DAT is divided at the position of 3 minutes from the start. Edit request analyzing portion 101 analyzes the user's division request for AA005.DAT (S112). Based on the analysis result of edit request analyzing portion 101, file dividing/coupling portion 302 divides multimedia information file AA005.DAT at the position of 3 minutes from the start (S114). Filename determining portion 303 determines the full filename of the first half as "AA005.DAT" (S116), and also determines the full filename of the latter half as "AA006.DAZ", which corresponds to the empty multimedia information number (S118). The extension of the full filename of the latter half is not "DAT" but is "DAZ" for the reason that will be described later.

In the dividing processing in S114, the following processing is performing simultaneously with the file division. For each of the two files prepared by division, the control information such as a file size or a reproduction time, which are stored in the header or footer, is set to correct values. The time stamps of the first half file AA005.DAT are already set to correct values starting from 0 seconds, but the time stamps of the latter half file AA006.DAZ are set to values starting from 3 minutes.

For resetting the time stamp of file AA006.DAZ, therefore, offset information describing portion 301 adds new time stamp offset information to the header, which stores control information of AA006.DAZ. In the time stamp offset information, "1" is set as the number of time stamp offset information item(s). Further, the packet at the start position is designated as the offset addition position, and a value of "-3 minutes" is set as the offset value. The normal multimedia information file expressed with the extension "DAT" is not extended with the time offset information. Therefore, such processing is performed that changes the extension into, e.g., "DAZ" for informing the user of the fact the normal multimedia information file has been uniquely extended.

If the number of time stamp offset information item(s) is 1, if the offset addition position is the start of the file, and if the offset value is prepared by inverting the sign of the value of the time stamp of the data at the start position, addition of the timestamp offset information may be eliminated. By employing this rule, it is possible to eliminate the addition of the time stamp offset information to the latter half file prepared by dividing the normal multimedia information file. Therefore, the processing of adding the time stamp offset information can be eliminated, and the overhead of the file size can be reduced.

For example, in such a case that the normal multimedia information file is divided into two, it is generally required to process the latter half file in such a manner that, after rewriting the control information such as a reproduction time and a number of packets, the time stamp offset information is newly added, and the extension of the full filename is changed. By employing the above rule, however, it is required to merely change the extension of the full filename after rewriting the control information such as a reproduction time and a number of packets. Therefore, the operation of adding the time stamp offset information is not required, and thereby the increase in file size can be prevented.

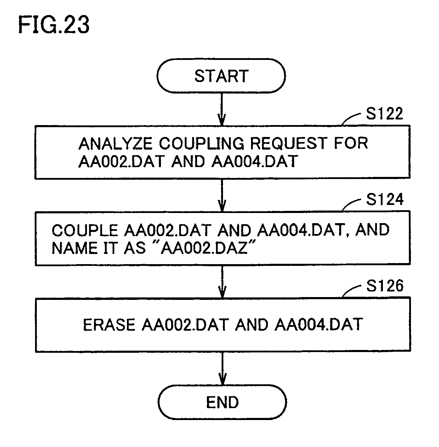

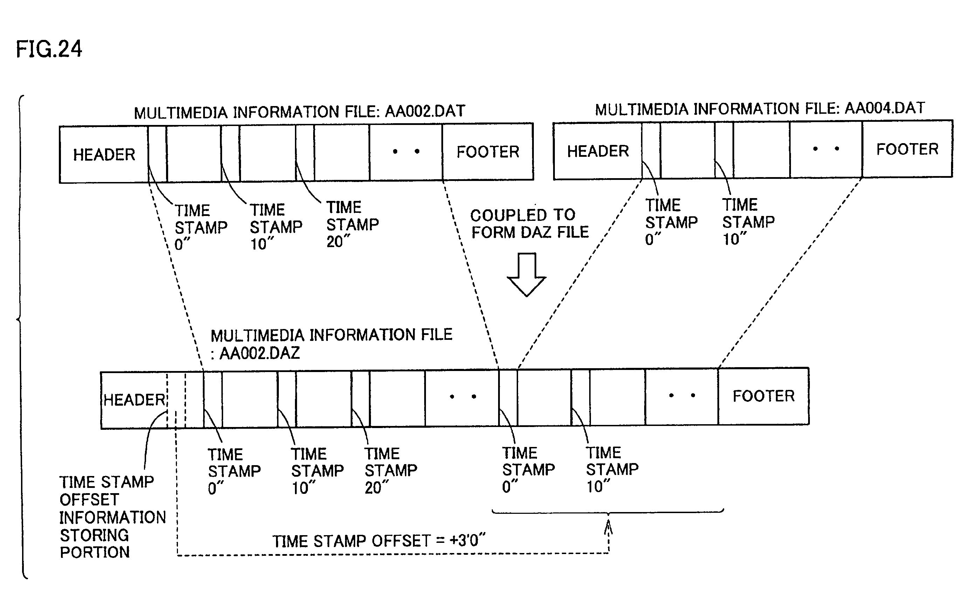

Referring to Figs. 23 and 24, an example of the coupling processing for multimedia information will now be described. The following description will be given on the case where multimedia information files AA002.DAT and AA004.DAT are to be coupled.

Edit request analyzing portion 101 analyzes the user's request for coupling files AA002.DAT and AA004.DAT (S112). Based on the coupling request, file dividing/coupling portion 302 prepares the file by coupling the data body of AA004.DAT to the end of data body of AA002.DAT. Further, file dividing/coupling portion 302 resets the control information such as a file size and a reproduction time, which are described in the header and/or footer of the file prepared by the coupling, to correct values.

Although the time stamps of the packet corresponding to the coupled first half portion are correct, the time stamps of the subsequent packets are set to values starting from 0 seconds, and therefore must be corrected. Accordingly, offset information describing portion 301 stores the time stamp offset information, which is used for correcting the coupled latter half portion, in the header of the file prepared by the coupling. The number of time stamp offset information item(s) of the time stamp offset information is set to "1". As the offset addition position, the packet at the start of the coupled latter half is designated. Further , as the offset value, the same value as the reproduction time of the coupled first half is set. For example, if the reproduction time of the coupled first half is 3 minutes, "3 minutes" is set as the offset value.

Filename determining portion 303 determines the full filename of the file prepared by the coupling as "AA002.DAZ" (S124). The file prepared by the coupling has been subjected to the original extension by adding the time stamp offset information. Therefore, the extension of the full filename is changed from "DAT" to "DAZ".

Thereafter, the coupled files AA002.DAT and AA004.DAT are erased (S126).

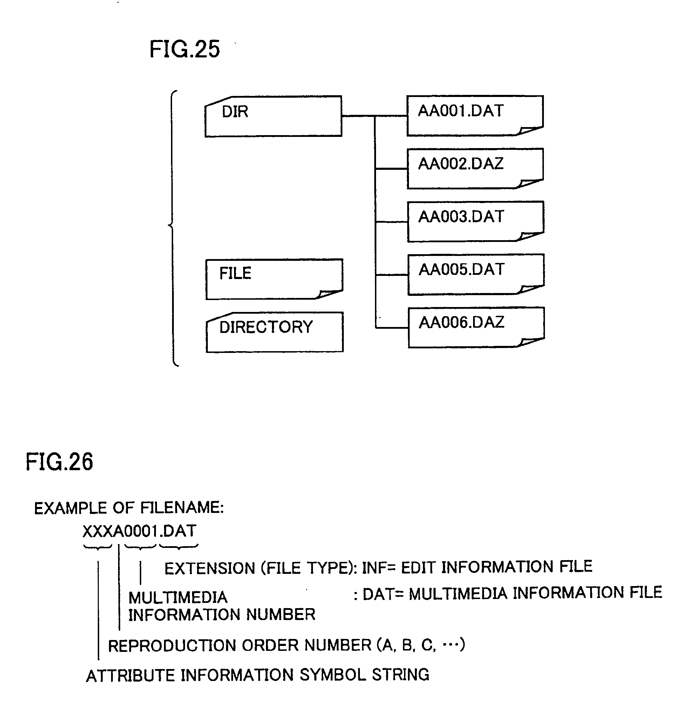

Referring to Fig. 25, description will now be given on the structure of directory DIR, which is formed after the dividing and coupling processing of the multimedia information, in accordance with the flowcharts of Figs. 21 and 23.

Before the dividing and coupling processing, five multimedia information files AA001.DAT- AA005.DAT were present in directory DIR. After dividing file AA005.DAT, file AA005.DAT of the first half and file AA006.DAZ of the latter half were produced. As a result of coupling of files AA002.DAT and AA004.DAT, files AA002.DAT and AA004.DAT are erased, and alternatively file AA002.DAZ was prepared.

Through the foregoing processing, the number of the multimedia information items corresponds to the number of multimedia information files in a one-to-one relationship. Therefore, the processing of determining the correspondence between the file and the information can be simple. Further, the file of a different format bearing the extension "DAZ" can be converted into a format of a normal multimedia information file bearing the extension of "DAT" be reproduced even by a player on a PC.

According to the fourth embodiment, as described above, the multimedia information is formed of one multimedia information file containing the time stamp offset information. Therefore, it is not necessary to describe the edit information as an independent file, and the correspondence can be clearly established between the multimedia information and the multimedia information file forming the same.

The multimedia information file, which has been uniquely extended, bears the extension "DAZ". Therefore, such a situation does not occur that a user attempts to reproduce the multimedia information file thus uniquely extended with reproduction software incompatible with such extension.

### [Example of Full Filename Determination]

Description will now be given on an example of the manner of determining the full filename in such a case that the file managing devices of the first to fourth embodiments already described are applied to a digital still camera and a system related thereto.

Referring to Fig. 26, full filenames of a multimedia information file and an edit information file are determined in accordance with filename determining rules in Exif (Exchangeable image file format), which is the standard of the format of image files used in digital cameras and related systems.

The rules for determining the full filenames based on Exif are described in the following items (1) (4):
(1) The full filename is formed of a "filename", "." and "extension". The filename is formed of an ASCII (American Standard Code for Information Interchange) character string of eight characters, and the extension is formed of an ASCII character string of 3 characters.
(2) Four characters of the first half of the 8-character filename are arbitrarily selected from uppercase alphabetic or numeric characters of single-bytes.
(3) Four characters of the latter half of the 8-character filename are selected from serial numbers "0001" - "9999".
(4) The extension is uniform.

Since the first four characters of the filename can be arbitrarily selected from uppercase alphabetic or numeric characters of single-bytes, it is prescribed in this example that the first to third characters form the attribute information symbol string, and the fourth character expresses the reproduction order in alphabetic order (the order of A, B, C, ···).

More specifically, the eight characters of the character filename are formed such that the first three characters form the attribute information symbol string, that the next one character provides the reproduction order number in alphabetic order, and that the remaining four characters provide the serial multimedia information number selected from "0001"-"9999".

In the third and fourth embodiments described above, the filename does not contain the reproduction order number, and is formed of the attribute information symbol string and the multimedia information number. Therefore, the first four characters provide the attribute information symbol string, and the latter four characters provide the multimedia information number.

Referring to Fig. 27, description will now be given on an example of a manner of determining the filename, of which the attribute information symbol string is formed of characters corresponding to an image shooting mode. It is assumed that the character at the start position of the attribute information symbol string represents a bit rate of recorded medium. A file prepared in a shooting mode of a bit rate of 28.8 kb/s is expressed by a character "A", and a file prepared in a shooting mode of a bit rate of 64 kb/s is expressed by a character "B". A file prepared in a shooting mode of a bit rate of 384 kb/s is expressed by a character "C".

The second character expresses the encoding type of moving pictures and the number of pixels. If the picture size is defined by QCIF (Quarter Common Intermediate Format: 176 x 144 (pixels)), and the encoding method MPEG (Moving Picture Experts Group) 4 is employed, the file thus obtained is expressed by "A". If the image size is defined by CIF (Common Intermediate Format: 352 x 288 (pixels)), and the encoding method MPEG4 is employed, the file thus obtained is expressed by "B". If the image size is defined by QCIF, and the encoding method MPEG1 is employed, the file thus obtained is expressed by "C". If the image size is defined by CIF, and the encoding method MPEG1 is employed, the file thus obtained is expressed by "D". A file not containing moving picture data is expressed by "Z".

The third character expresses the audio encoding method. A file encoded in ITU (International Telecommunication Union) - T recommendation G.726 is expressed by the character "A". A file encoded in ITU-T recommendation G.728 is expressed by the character "B". A file encoded in MPEG layer 3 is expressed by the character "C". A file not containing audio data is expressed by the character "Z".

Since the file characteristics are expressed in the filename, it is not necessary to reproduce the file only for the purpose of determining the file characteristics when the data obtained by the shooting is to be reused by copying the file to a PC. For example, in the case where the data obtained by the shooting is to be pasted on a home page for image distribution, it is generally specified whether the data is for a modem line or an ISDN (Integrated Services Digital Network) line. For this, the bit rate at which the shooting was performed must be determined. According to the invention, such information can be determined from the filename so that it is not necessary to reproduce the data only for the determination.

In the case of reproducing a file prepared by coupling files, which were recorded in the same encoding method, it is possible to start the reproduction of the second file immediately after reproducing the first file. However, in the case of reproducing a file prepared by coupling files, which were recorded in different encoding methods, respectively, setting or the like of the encoding method is required between the end of reproduction of the first file and the start of reproduction of the next file. Therefore, the files cannot be reproduced continuously, and an interval occurs in the file-coupled portion.

Therefore, it may be necessary to inhibit the coupling of files, which were recorded in the different encoding methods, respectively. Alternatively, it may be necessary to notify a user of such file coupling before the actual coupling. For determining the file encoding method of the file, it is necessary to analyze the control information of the file for clarifying the encoding method. According to the invention, the encoding method employed for the file can be determined from the filename so that it is not necessary to analyze the control information within the file only for the purpose of such determination.

### Industrial Applicability

According to the file managing device of the invention, as described above, it is possible to determine easily the correspondence of the edited multimedia information with respect to the multimedia information file and the edit information file forming the multimedia information. Therefore, the invention is suitable to the case, in which the multimedia information file and the edit information file forming the specific multimedia information are to be determined only from the full filename.

## Claims

1. A file managing device comprising:
a record medium for recording a multimedia information file;
an edit request analyzing portion (101) for analyzing a user's operation to determine the multimedia information file to be edited and an intended editing manner;
an editing portion (105) connected to said record medium and said edit request analyzing portion (101) for editing said multimedia information file based on the result of analysis by said edit request analyzing portion (101);
an edit information file preparing portion (107) connected to said edit request analyzing portion (101) for preparing an edit information file describing, as a result of editing of the multimedia information, file reproduction information indicating the multimedia information file to be reproduced and the manner of reproduction of the multimedia information as a result of said editing, and
**characterised by** a multimedia information name determining portion (102, 103, 104, 106, 201) connected to said record medium, said editing portion (105) and said edit information file preparing portion (107) for generating full filenames of the multimedia information file and the edit information file forming the edited multimedia information, wherein correspondence of the edited multimedia information to said multimedia information is established.

2. The file managing device according to claim 1, wherein
said edit information file preparing portion (107) prepares the edit information file for each item of multimedia information.

3. The file managing device according to claim 2, wherein
said multimedia information name determining portion (102, 103, 104, 106, 201) includes:
a multimedia information number determining portion (102) connected to said edit request analyzing portion (101) for determining a serial number to be assigned to the edited multimedia information;
a reproduction order number determining portion (103) connected to said edit request analyzing portion (101) and used for the edited multimedia information formed of the plurality of multimedia information files for determining a reproduction order number indicating an order of reproduction of each multimedia information file;
an attribute information symbol string determining portion (104) connected to said edit request analyzing portion (101) for determining a symbol string indicating an attribute of the multimedia information; and
a filename determining portion (106) connected to said record medium, said editing portion (105), said edit information file preparing portion (107), said multimedia information number determining portion (102), said reproduction order number determining portion (103) and said attribute information symbol string determining portion (104) for determining the full filenames of the multimedia information file and the edit information file forming the edited multimedia information based on the outputs of said multimedia information number determining portion (102), said reproduction order number determining portion (103) and said attribute information symbol string determining portion (104).

4. The file managing device according to claim 1, wherein
said multimedia information name determining portion (102, 103, 104, 106, 201) includes:
a multimedia information number determining portion (102) connected to said edit request analyzing portion (101) for determining a serial number to be assigned to the edited multimedia information;
a reproduction order number determining portion (103) connected to said edit request analyzing portion (101) and used for the edited multimedia information formed of the plurality of multimedia information files for determining a reproduction order number indicating an order of reproduction of each multimedia information file;
an attribute information symbol string determining portion (104) connected to said edit request analyzing portion (101) for determining a symbol string indicating an attribute of the multimedia information; and
a filename determining portion (106) connected to said record medium, said editing portion (105), said edit information file preparing portion (107), said multimedia information number determining portion (102), said reproduction order number determining portion (103) and said attribute information symbol string determining portion (104) for determining the full filenames of the multimedia information file and the edit information file forming the edited multimedia information based on the outputs of said multimedia information number determining portion (102), said reproduction order number determining portion (103) and said attribute information symbol string determining portion (104).

5. The file managing device according to claim 4, wherein
said attribute information symbol string determining portion (104) outputs a character string corresponding to a shooting mode employed for taking in the multimedia information.

6. The file managing device according to claim 1, further comprising:
a directory preparing portion (202) connected to said multimedia information name determining portion (102, 103, 104, 106, 201) for preparing the directory corresponding to the edited multimedia information, and storing the multimedia information file forming the edited multimedia information in said directory.

7. The file managing device according to claim 6, wherein
said multimedia information name determining portion (102, 103, 104, 106, 201) includes:
a multimedia information number determining portion (102) connected to said edit request analyzing portion (101) for determining a serial number to be assigned to the edited multimedia information;
an attribute information symbol string determining portion (104) connected to said edit request analyzing portion (101) for determining a symbol string indicating an attribute of the multimedia information; and
a filename determining portion (201) connected to said record medium, said editing portion (105), said edit information file preparing portion (107), said multimedia information number determining portion (102) and said attribute information symbol string determining portion (104) for determining the full filenames of the multimedia information file and the edit information file forming the edited multimedia information based on the outputs of said multimedia information number determining portion (102) and said attribute information symbol string determining portion (104).

8. The file managing device according to claim 7, wherein
said-attribute information symbol string determining portion (104) outputs a character string corresponding to a shooting mode employed for taking in the multimedia information.

9. A file managing device comprising:
a record medium for recording a multimedia information file;
an edit request analyzing portion (101) for analyzing a user's operation to determine the multimedia information file to be edited and an intended editing manner;
an editing portion (302) connected to said record medium and said edit request analyzing portion (101) for editing said multimedia information file based on the result of analysis by said edit request analyzing portion (101);
an offset information describing portion (301) connected to said edit request analyzing portion (101) and said editing portion (302) for describing, in said multimedia information file, time stamp offset information for correcting a time stamp of the multimedia information file forming the edited multimedia information; and
**characterised by** a multimedia information name determining portion (102, 104, 303) connected to said edit request analyzing portion (101) and said editing portion (302) for generating a full filename of the multimedia information file forming the edited multimedia information, wherein a correspondence of the edited multimedia information to said multimedia information is established.

10. The file managing device according to claim 9, wherein
said multimedia information name determining portion (102, 104, 303) changes an extension of the full filename of the multimedia information file requiring correction of the time stamp.

11. The file managing device according to claim 10, wherein
said offset information describing portion (301) omits assignment of the time stamp offset information for the latter half multimedia information file requiring correction of the time stamp between the two multimedia information files prepared by dividing the multimedia information file by said editing portion (302).

12. The file managing device according to claim 11, wherein
said multimedia information name determining portion (102, 104, 303) includes:
a multimedia information number determining portion (102) connected to said edit request analyzing portion (101) for determining a serial number to be assigned to the edited multimedia information;
an attribute information symbol string determining portion (104) connected to said edit request analyzing portion (101) for determining a symbol string indicating an attribute of the multimedia information; and
a filename determining portion (303) connected to said multimedia information number determining portion (102), said attribute information symbol string determining portion (104) and said editing portion (302) for determining the full filename of the multimedia information file forming the edited multimedia information based on the outputs of said multimedia information number determining portion (102) and said attribute information symbol string determining portion (104).

13. The file managing device according to claim 12, wherein
said attribute information symbol string determining portion (104) outputs a character string corresponding to a shooting mode employed for taking in the multimedia information.

14. The file managing device according to claim 10, wherein
said multimedia information name determining portion (102, 104, 303) includes:
a multimedia information number determining portion (102) connected to said edit request analyzing portion (101) for determining a serial number to be assigned to the edited multimedia information;
an attribute information symbol string determining portion (104) connected to said edit request analyzing portion (101) for determining a symbol string indicating an attribute of the multimedia information; and
a filename determining portion (303) connected to said multimedia information number determining portion (102), said attribute information symbol string determining portion (104) and said editing portion (302) for determining the full filename of the multimedia information file forming the edited multimedia information based on the outputs of said multimedia information number determining portion (102) and said attribute information symbol string determining portion (104).

15. The file managing device according to claim 14, wherein
said attribute information symbol string determining portion (104) outputs a character string corresponding to a shooting mode employed for taking in the multimedia information.

16. The file managing device according to claim 9, wherein
said multimedia information name determining portion (102, 104, 303) includes:
a multimedia information number determining portion (102) connected to said edit request analyzing portion (101) for determining a serial number to be assigned to the edited multimedia information;
an attribute information symbol string determining portion (104) connected to said edit request analyzing portion (101) for determining a symbol string indicating an attribute of the multimedia information; and
a filename determining portion (303) connected to said multimedia information number determining portion (102), said attribute information symbol string determining portion (104) and said editing portion (302) for determining the full filename of the multimedia information file forming the edited multimedia information based on the outputs of said multimedia information number determining portion (102) and said attribute information symbol string determining portion (104).

17. The file managing device according to claim 16, wherein
said attribute information symbol string determining portion (104) outputs a character string corresponding to a shooting mode employed for taking in the multimedia information.

## Patentansprüche

1. Dateiverwaltungsvorrichtung mit:
einem Aufzeichnungsträger zum Aufzeichnen einer Multimediainformationsdatei;
einem Editieranfrage-Analysierabschnitt (101) zum Analysieren einer von einem Benutzer ausgeführten Bedienung zum Bestimmen der zu editierenden Multimediainformationsdatei und der vorgesehenen Editierweise;
einem Editierabschnitt (105), der mit dem Aufzeichnungsträger und dem Editieranfrage-Analysierabschnitt (101) verbunden ist, um die Multimediainformationsdatei auf Grundlage des Ergebnisses der Analyse durch den Editieranfrage-Analysierabschnitt (101) zu editieren;
einem Editierinformationsdatei-Erstellabschnitt (107), der mit dem Editieranfrage-Analysierabschnitt (101) verbunden ist, um eine Editierinformationsdatei zu erstellen, die, als Ergebnis des Editierens der Multimediainformation, Dateireproduzierinformation beschreibt, die die zu reproduzierende Multimediainformationsdatei und die Reproduzierart der Multimediainformation als Ergebnis des Editierens anzeigt;
**gekennzeichnet durch**
einen Multimediainformationsname-Bestimmungsabschnitt (102, 103, 104, 106, 201), der mit dem Aufzeichnungsträger, dem Editierabschnitt (105) und dem Editierinformationsdatei-Erstellabschnitt (107) verbunden ist, um vollständige Dateinamen der die editierte Multimediainformation bildenden Multimediainformationsdatei und Editierinformationsdatei zu erzeugen, wobei für Entsprechung der editierten Multimediainformation zur Multimediainformation gesorgt wird.

2. Dateiverwaltungsvorrichtung nach Anspruch 1, bei der der Editierinformationsdatei-Erstellabschnitt (107) die Editierinformationsdatei für jede einzelne Multimediainformation erzeugt.

3. Dateiverwaltungsvorrichtung nach Anspruch 2, bei der der Multimediainformationsname-Bestimmungsabschnitt (102, 103, 104, 106, 201) Folgendes aufweist:
einen Multimediainformationsnummer-Bestimmungsabschnitt (102), der mit dem Editieranfrage-Analysierabschnitt (101) verbunden ist, um eine der editierten Multimediainformation zuzuweisende Seriennummer zu bestimmen;
einen Reproduzierreihenfolgenummer-Bestimmungsabschnitt (103), der mit dem Editieranfrage-Analysierabschnitt verbunden ist und für die aus den mehreren Multimediainformationsdateien erzeugte editierte Multimediainformation verwendet wird, um eine Reproduzierreihenfolgenummer zu bestimmen, die die Reproduzierreihenfolge jeder Multimediainformationsdatei anzeigt;
einen Attributinformationssymbolkette-Bestimmungsabschnitt (104), der mit dem Editieranfrage-Analysierabschnitt (101) verbunden ist, um eine Symbolkette zu bestimmen, die ein Attribut der Multimediainformation anzeigt; und
einen Dateiname-Bestimmungsabschnitt (106), der mit dem Aufzeichnungsträger, dem Editierabschnitt (105), dem Editierinformationsdatei-Erstellabschnitt (107), dem Multimediainformationsnummer-Bestimmungsabschnitt (102), dem Reproduzierreihenfolgenummer-Bestimmungsabschnitt (103) und dem Attributinformationssymbolkette-Bestimmungsabschnitt (104) verbunden ist, um die vollständigen Dateinamen der die editierte Multimediainformation bildenden Multimediainformationsdatei und Editierinformationsdatei auf Grundlage der Ausgangssignale des Multimediainformationsnummer-Bestimmungsabschnitts (102), des Reproduzierreihenfolgenummer-Bestimmungsabschnitts (103) und des Attributinformationssymbolkette-Bestimmungsabschnitts (104) zu bestimmen.

4. Dateiverwaltungsvorrichtung nach Anspruch 1, bei der der Multimediainformationsname-Bestimmungsabschnitt (102, 103, 104, 106, 201) Folgendes aufweist:
einen Multimediainformationsnummer-Bestimmungsabschnitt (102), der mit dem Editieranfrage-Analysierabschnitt (101) verbunden ist, um eine der editierten Multimediainformation zuzuweisende Seriennummer zu bestimmen;
einen Reproduzierreihenfolgenummer-Bestimmungsabschnitt (103), der mit dem Editieranfrage-Analysierabschnitt verbunden ist und für die aus den mehreren Multimediainformationsdateien erzeugte editierte Multimediainformation verwendet wird, um eine Reproduzierreihenfolgenummer zu bestimmen, die die Reproduzierreihenfolge jeder Multimediainformationsdatei anzeigt;
einen Attributinformationssymbolkette-Bestimmungsabschnitt (104), der mit dem Editieranfrage-Analysierabschnitt (101) verbunden ist, um eine Symbolkette zu bestimmen, die ein Attribut der Multimediainformation anzeigt; und
einen Dateiname-Bestimmungsabschnitt (106), der mit dem Aufzeichnungsträger, dem Editierabschnitt (105), dem Editierinformationsdatei-Erstellabschnitt (107), dem Multimediainformationsnummer-Bestimmungsabschnitt (102), dem Reproduzierreihenfolgenummer-Bestimmungsabschnitt (103) und dem Attributinformationssymbolkette-Bestimmungsabschnitt (104) verbunden ist, um die vollständigen Dateinamen der die editierte Multimediainformation bildenden Multimediainformationsdatei und Editierinformationsdatei auf Grundlage der Ausgangssignale des Multimediainformationsnummer-Bestimmungsabschnitts (102), des Reproduzierreihenfolgenummer-Bestimmungsabschnitts (103) und des Attributinformationssymbolkette-Bestimmungsabschnitts (104) zu bestimmen.

5. Dateiverwaltungsvorrichtung nach Anspruch 4, bei der der Attributinformationssymbolkette-Bestimmungsabschnitt (104) eine Zeichenkette ausgibt, die einem zum Aufnehmen der Multimediainformation verwendeten Aufnahmemodus entspricht.

6. Dateiverwaltungsvorrichtung nach Anspruch 1, ferner mit einem Verzeichniserstellabschnitt (102), der mit dem Multimediainformationsname-Bestimmungsabschnitt (102, 103, 104, 106, 201) verbunden ist, um das der editierten Multimediainformation entsprechende Verzeichnis zu erstellen und um die die editierte Multimediainformation bildende Multimediainformationsdatei in diesem Verzeichnis abzuspeichern.

7. Dateiverwaltungsvorrichtung nach Anspruch 6, bei der der Multimediainformationsname-Bestimmungsabschnitt (102, 103, 104, 106, 201) Folgendes aufweist:
einen Multimediainformationsnummer-Bestimmungsabschnitt (102), der mit dem Editieranfrage-Analysierabschnitt (101) verbunden ist, um eine der editierten Multimediainformation zuzuweisende Seriennummer zu bestimmen;
einen Attributinformationssymbolkette-Bestimmungsabschnitt (104), der mit dem Editieranfrage-Analysierabschnitt (101) verbunden ist, um eine Symbolkette zu bestimmen, die ein Attribut der Multimediainformation anzeigt; und
einen Dateiname-Bestimmungsabschnitt (106), der mit dem Aufzeichnungsträger, dem Editierabschnitt (105), dem Editierinformationsdatei-Erstellabschnitt (107), dem Multimediainformationsnummer-Bestimmungsabschnitt (102) und dem Attributinformationssymbolkette-Bestimmungsabschnitt (104) verbunden ist, um die vollständigen Dateinamen der die editierte Multimediainformation bildenden Multimediainformationsdatei und Editierinformationsdatei auf Grundlage der Ausgangssignale des Multimediainformationsnummer-Bestimmungsabschnitts (102) und des Attributinformationssymbolkette-Bestimmungsabschnitts (104) zu bestimmen.

8. Dateiverwaltungsvorrichtung nach Anspruch 7, bei der der Attributinformationssymbolkette-Bestimmungsabschnitt (104) eine Zeichenkette ausgibt, die einem zum Aufnehmen der Multimediainformation verwendeten Aufnahmemodus entspricht.

9. Dateiverwaltungsvorrichtung mit:
einem Aufzeichnungsträger zum Aufzeichnen einer Multimediainformationsdatei;
einem Editieranfrage-Analysierabschnitt (101) zum Analysieren einer von einem Benutzer ausgeführten Bedienung zum Bestimmen der zu editierenden Multimediainformationsdatei und der vorgesehenen Editierweise;
einem Editierabschnitt (302), der mit dem Aufzeichnungsträger und dem Editieranfrage-Analysierabschnitt (101) verbunden ist, um die Multimediainformationsdatei auf Grundlage des Ergebnisses der Analyse durch den Editieranfrage-Analysierabschnitt (101) zu editieren;
einem Offsetinformation-Beschreibungsabschnitt (302), der mit dem Editieranfrage-Analysierabschnitt (101) und dem Editierabschnitt (302) verbunden ist, um, innerhalb der Multimediainformationsdatei, Zeitmarkierungs-Offsetinformation zum Korrigieren einer Zeitmarkierung der die editierte Multimediainformation bildenden Multimediainformationsdatei zu beschreiben;
**gekennzeichnet durch**
einen Multimediainformationsname-Bestimmungsabschnitt (102, 104, 303), der mit dem Editierinformationsdatei (101) und dem Editierabschnitt (302) verbunden ist, um vollständige Dateinamen der die editierte Multimediainformation bildenden Multimediainformationsdatei und Editierinformationsdatei zu erzeugen, wobei für Entsprechung der editierten Multimediainformation zur Multimediainformation gesorgt wird.

10. Dateiverwaltungsvorrichtung nach Anspruch 9, bei der der Multimediainformationsname-Bestimmungsabschnitt (102, 104, 303) die Erweiterung des vollständigen Dateinamens einer Multimediainformationsdatei ändert, für die eine Korrektur der Zeitmarkierung erforderlich ist.

11. Dateiverwaltungsvorrichtung nach Anspruch 10, bei der der Offsetinformation-Beschreibungsabschnitt (301) eine Zuweisung der Zeitmarkierungsoffsetinformation für die hintere halbe Multimediainformationsdatei, die eine Korrektur der Zeitmarkierung benötigt, zwischen zwei Multimediainformationsdateien weglässt, die durch Unterteilen der Multimediainformationsdatei durch den Editierabschnitt (302) erstellt wurden.

12. Dateiverwaltungsvorrichtung nach Anspruch 11, bei der der Multimediainformationsname-Bestimmungsabschnitt (102, 103, 104, 303) Folgendes aufweist:
einen Multimediainformationsnummer-Bestimmungsabschnitt (102), der mit dem Editieranfrage-Analysierabschnitt (101) verbunden ist, um eine der editierten Multimediainformation zuzuweisende Seriennummer zu bestimmen;
einen Attributinformationssymbolkette-Bestimmungsabschnitt (104), der mit dem Editieranfrage-Analysierabschnitt (101) verbunden ist, um eine Symbolkette zu bestimmen, die ein Attribut der Multimediainformation anzeigt; und
einen Dateiname-Bestimmungsabschnitt (303), der mit dem Multimediainformationsnummer-Bestimmungsabschnitt (102), dem Attributinformationssymbolkette-Bestimmungsabschnitt (104) und dem Editierabschnitt (302) verbunden ist, um den vollständigen Dateinamen der die editierte Multimediainformation bildenden Multimediainformationsname-Bestimmungsabschnitt auf Grundlage der Ausgangssignale des Multimediainformationsnummer-Bestimmungsabschnitts (102) und des Attributinformationssymbolkette-Bestimmungsabschnitts (104) zu bestimmen.

13. Dateiverwaltungsvorrichtung nach Anspruch 12, bei der der Attributinformationssymbolkette-Bestimmungsabschnitt (104) eine Zeichenkette ausgibt, die einem zum Aufnehmen der Multimediainformation verwendeten Aufnahmemodus entspricht.

14. Dateiverwaltungsvorrichtung nach Anspruch 10, bei der der Multimediainformationsname-Bestimmungsabschnitt (102, 104, 303) Folgendes aufweist:
einen Multimediainformationsnummer-Bestimmungsabschnitt (102), der mit dem Editieranfrage-Analysierabschnitt (101) verbunden ist, um eine der editierten Multimediainformation zuzuweisende Seriennummer zu bestimmen;
einen Attributinformationssymbolkette-Bestimmungsabschnitt (104), der mit dem Editieranfrage-Analysierabschnitt (101) verbunden ist, um eine Symbolkette zu bestimmen, die ein Attribut der Multimediainformation anzeigt; und
einen Dateiname-Bestimmungsabschnitt (303), der mit dem Multimediainformationsnummer-Bestimmungsabschnitt (102), dem Attributinformationssymbolkette-Bestimmungsabschnitt (104) und dem Editierabschnitt (302) verbunden ist, um den vollständigen Dateinamen der die editierte Multimediainformation bildenden Multimediainformationsname-Bestimmungsabschnitt auf Grundlage der Ausgangssignale des Multimediainformationsnummer-Bestimmungsabschnitts (102) und des Attributinformationssymbolkette-Bestimmungsabschnitts (104) zu bestimmen.

15. Dateiverwaltungsvorrichtung nach Anspruch 14, bei der der Attributinformationssymbolkette-Bestimmungsabschnitt (104) eine Zeichenkette ausgibt, die einem zum Aufnehmen der Multimediainformation verwendeten Aufnahmemodus entspricht.

16. Dateiverwaltungsvorrichtung nach Anspruch 9, bei der der Multimediainformationsname-Bestimmungsabschnitt (102, 104, 303) Folgendes aufweist:
einen Multimediainformationsnummer-Bestimmungsabschnitt (102), der mit dem Editieranfrage-Analysierabschnitt (101) verbunden ist, um eine der editierten Multimediainformation zuzuweisende Seriennummer zu bestimmen;
einen Attributinformationssymbolkette-Bestimmungsabschnitt (104), der mit dem Editieranfrage-Analysierabschnitt (101) verbunden ist, um eine Symbolkette zu bestimmen, die ein Attribut der Multimediainformation anzeigt; und
einen Dateiname-Bestimmungsabschnitt (303), der mit dem Multimediainformationsnummer-Bestimmungsabschnitt (102), dem Attributinformationssymbolkette-Bestimmungsabschnitt (104) und dem Editierabschnitt (302) verbunden ist, um den vollständigen Dateinamen der die editierte Multimediainformation bildenden Multimediainformationsname-Bestimmungsabschnitt auf Grundlage der Ausgangssignale des Multimediainformationsnummer-Bestimmungsabschnitts (102) und des Attributinformationssymbolkette-Bestimmungsabschnitts (104) zu bestimmen.

17. Dateiverwaltungsvorrichtung nach Anspruch 16, bei der der Attributinformationssymbolkette-Bestimmungsabschnitt (104) eine Zeichenkette ausgibt, die einem zum Aufnehmen der Multimediainformation verwendeten Aufnahmemodus entspricht.

## Revendications

1. Dispositif de gestion de fichiers comprenant :
un support d'enregistrement pour enregistrer un fichier d'informations multimédia ;
une partie d'analyse de requête d'édition (101) pour analyser l'opération d'un utilisateur afin de déterminer le fichier d'informations multimédia à éditer et une manière d'édition souhaitée ;
une partie d'édition (105) reliée audit support d'enregistrement et à ladite partie d'analyse de requête d'édition (101) pour éditer ledit fichier d'informations multimédia en fonction du résultat de l'analyse effectuée par ladite partie d'analyse de requête d'édition (101) ;
une partie de préparation de fichier d'informations d'édition (107) reliée à ladite partie d'analyse de requête d'édition (101) pour préparer un fichier d'informations d'édition décrivant, comme résultat de l'édition des informations multimédia, des informations de reproduction de fichier indiquant le fichier d'informations multimédia à reproduire et la manière de reproduction des informations multimédia comme résultat de ladite édition, et
**caractérisé par** une partie de détermination de nom d'informations multimédia (102, 103, 104, 106, 201) reliée audit support d'enregistrement, à ladite partie d'édition (105) et à ladite partie de préparation de fichier d'informations d'édition (107) pour générer des noms de fichier complets du fichier d'informations multimédia et du fichier d'informations d'édition formant les informations multimédia éditées, dans lequel une correspondance des informations multimédia éditées avec lesdites informations multimédia est établie.

2. Dispositif de gestion de fichiers selon la revendication 1, dans lequel
ladite partie de préparation de fichier d'informations d'édition (107) prépare le fichier d'informations d'édition pour chaque élément d'informations multimédia.

3. Dispositif de gestion de fichiers selon la revendication 2, dans lequel
ladite partie de détermination de nom d'informations multimédia (102, 103, 104, 106, 201) comprend :
une partie de détermination de numéro d'informations multimédia (102) reliée à ladite partie d'analyse de requête d'édition (101) pour déterminer un numéro de série à affecter aux informations multimédia éditées ;
une partie de détermination de numéro d'ordre de reproduction (103) reliée à ladite partie d'analyse de requête d'édition (101) et utilisée pour les informations multimédia éditées formées des multiples fichiers d'informations multimédia pour déterminer un numéro d'ordre de reproduction indiquant un ordre de reproduction de chaque fichier d'informations multimédia ;
une partie de détermination de chaîne de symboles d'informations d'attribut (104) reliée à ladite partie d'analyse de requête d'édition (101) pour déterminer une chaîne de symboles indiquant un attribut des informations multimédia ; et
une partie de détermination de nom de fichier (106) reliée audit support d'enregistrement, à ladite partie d'édition (105), à ladite partie de préparation de fichier d'informations d'édition (107), à ladite partie de détermination de numéro d'informations multimédia (102), à ladite partie de détermination de numéro d'ordre de reproduction (103), et à ladite partie de détermination de chaîne de symboles d'informations d'attribut (104) pour déterminer les noms de fichier complets du fichier d'informations multimédia et du fichier d'informations d'édition formant les informations multimédia éditées en fonction des sorties de ladite partie de détermination de numéro d'informations multimédia (102), de ladite partie de détermination de numéro d'ordre de reproduction (103) et de ladite partie de détermination de chaîne de symboles d'informations d'attribut (104).

4. Dispositif de gestion de fichiers selon la revendication 1, dans lequel
ladite partie de détermination de nom d'informations multimédia (102, 103, 104, 106, 201) comprend:
une partie de détermination de numéro d'informations multimédia (102) reliée à ladite partie d'analyse de requête d'édition (101) pour déterminer un numéro de série à affecter auxdites informations multimédia éditées;
une partie de détermination de numéro d'ordre de reproduction (103) reliée à ladite partie d'analyse de requête d'édition (101) et utilisée pour les informations multimédia éditées formées des multiples fichiers d'informations multimédia pour déterminer un numéro d'ordre de reproduction indiquant un ordre de reproduction de chaque fichier d'informations multimédia ;
une partie de détermination de chaîne de symboles d'informations d'attribut (104) reliée à ladite partie d'analyse de requête d'édition (101) pour déterminer une chaîne de symboles indiquant un attribut des informations multimédia ; et
une partie de détermination de nom de fichier (106) reliée audit support d'enregistrement, à ladite partie d'édition (105), à ladite partie de préparation de fichier d'informations d'édition (107), à ladite partie de détermination de numéro d'informations multimédia (102), à ladite partie de détermination de numéro d'ordre de reproduction (103) et à ladite partie de détermination de chaîne de symboles d'informations d'attribut (104) pour déterminer les noms de fichier complets du fichier d'informations multimédia et du fichier d'informations d'édition formant les informations multimédia éditées en fonction des sorties de ladite partie de détermination de numéro d'informations multimédia (102), de ladite partie de détermination de numéro d'ordre de reproduction (103) et de ladite partie de détermination de chaîne de symboles d'informations d'attribut (104).

5. Dispositif de gestion de fichiers selon la revendication 4, dans lequel
ladite partie de détermination de chaîne de symboles d'informations d'attribut (104) fournit une chaîne de caractères correspondant à un mode de prise de vue utilisé pour recevoir les informations multimédia.

6. Dispositif de gestion de fichiers selon la revendication 1, comprenant en outre :
une partie de préparation de répertoire (202) reliée à ladite partie de détermination de nom d'informations multimédia (102, 103, 104, 106, 201) pour préparer le répertoire correspondant aux informations multimédia éditées, et stocker dans ledit répertoire le fichier d'informations multimédia formant les informations multimédia éditées.

7. Dispositif de gestion de fichiers selon la revendication 6, dans lequel
ladite partie de détermination de nom d'informations multimédia (102, 103, 104, 106, 201) comprend :
une partie de détermination de numéro d'informations multimédia (102) reliée à ladite partie d'analyse de requête d'édition (101) pour déterminer un numéro de série à affecter aux informations multimédia éditées ;
une partie de détermination de chaîne de symboles d'informations d'attribut (104) reliée à ladite partie d'analyse de requête d'édition (101) pour déterminer une chaîne de symboles indiquant un attribut des informations multimédia ; et
une partie de détermination de nom de fichier (201) reliée audit support d'enregistrement, à ladite partie d'édition (105), à ladite partie de préparation de fichier d'informations d'édition (107), à ladite partie de détermination de numéro d'informations multimédia (102) et à ladite partie de détermination de chaîne de symboles d'informations d'attribut (104) pour déterminer les noms de fichier complets du fichier d'informations multimédia et du fichier d'informations d'édition formant les informations multimédia éditées en fonction des sorties de ladite partie de détermination de numéro d'informations multimédia (102) et de ladite partie de détermination de chaîne de symboles d'informations d'attribut (104).

8. Dispositif de gestion de fichiers selon la revendication 7, dans lequel
ladite partie de détermination de chaîne de symboles d'informations d'attribut (104) fournit une chaîne de caractères correspondant à un mode de prise de vue utilisé pour recevoir les informations multimédia.

9. Dispositif de gestion de fichiers comprenant :
un support d'enregistrement destiné à enregistrer un fichier d'informations multimédia ;
une partie d'analyse de requête d'édition (101) pour analyser l'opération d'un utilisateur afin de déterminer le fichier d'informations multimédia à éditer et une manière d'édition souhaitée ;
une partie d'édition (302) reliée audit support d'enregistrement et à ladite partie d'analyse de requête d'édition (101) pour éditer ledit fichier d'informations multimédia en fonction du résultat de l'analyse effectuée par ladite partie d'analyse de requête d'édition (101) ;
une partie de description d'informations de décalage (301) reliée à ladite partie d'analyse de requête d'édition (101) et à ladite partie d'édition (302) pour décrire, dans ledit fichier d'informations multimédia, des informations de décalage d'horodatage pour corriger un horodatage du fichier d'informations multimédia formant les informations multimédia éditées ; et
**caractérisé par** une partie de détermination de nom d'informations multimédia (102, 104, 303) reliée à ladite partie d'analyse de requête d'édition (101) et à ladite partie d'édition (302) pour générer un nom de fichier complet du fichier d'informations multimédia formant les informations multimédia éditées, dans lequel une correspondance des informations multimédia éditées avec les informations multimédia est établie.

10. Dispositif de gestion de fichiers selon la revendication 9, dans lequel
ladite partie de détermination de nom d'informations multimédia (102, 104, 303) change une extension du nom de fichier complet du fichier d'informations multimédia nécessitant une correction de l'horodatage.

11. Dispositif de gestion de fichiers selon la revendication 10, dans lequel
ladite partie de description d'informations de décalage (301) omet l'affectation des informations de décalage d'horodatage pour le dernier demi-fichier d'informations multimédia nécessitant une correction de l'horodatage entre les deux fichiers d'informations multimédia préparés en divisant le fichier d'informations multimédia par ladite partie d'édition (302).

12. Dispositif de gestion de fichiers selon la revendication 11, dans lequel
ladite partie de détermination de nom d'informations multimédia (102, 104, 303) comprend :
une partie de détermination de numéro d'informations multimédia (102) reliée à ladite partie d'analyse de requête d'édition (101) pour déterminer un numéro de série devant être affecté aux informations multimédia éditées ;
une partie de détermination de chaîne de symboles d'informations d'attribut (104) reliée à ladite partie d'analyse de requête d'édition (101) pour déterminer une chaîne de symboles indiquant un attribut des informations multimédia ; et
une partie de détermination de nom de fichier (303) reliée à ladite partie de détermination de numéro d'informations multimédia (102), à ladite partie de détermination de chaîne de symboles d'informations d'attribut (104) et à ladite partie d'édition (302) pour déterminer le nom de fichier complet du fichier d'informations multimédia formant les informations multimédia éditées en fonction des sorties de ladite partie de détermination de numéro d'informations multimédia (102) et de ladite partie de détermination de chaîne de symboles d'informations d'attribut (104).

13. Dispositif de gestion de fichiers selon la revendication 12, dans lequel
ladite partie de détermination de chaîne de symboles d'informations d'attribut (104) fournit une chaîne de caractères correspondant à un mode de prise de vue utilisé pour recevoir les informations multimédia.

14. Dispositif de gestion de fichiers selon la revendication 10, dans lequel
ladite partie de détermination de nom d'informations multimédia (102, 104, 303) comprend:
une partie de détermination de numéro d'informations multimédia (102) reliée à ladite partie d'analyse de requête d'édition (101) pour déterminer un numéro de série devant être affecté aux informations multimédia éditées ;
une partie de détermination de chaîne de symboles d'informations d'attribut (104) reliée à ladite partie d'analyse de requête d'édition (101) pour déterminer une chaîne de symboles indiquant un attribut des informations multimédia ; et
une partie de détermination de nom de fichier (303) reliée à ladite partie de détermination de numéro d'informations multimédia (102), à ladite partie de détermination de chaîne de symboles d'informations d'attribut (104) et à ladite partie d'édition (302) pour déterminer le nom de fichier complet du fichier d'informations multimédia formant les informations multimédia éditées en fonction des sorties de ladite partie de détermination de numéro d'informations multimédia (102) et de ladite partie de détermination de chaîne de symboles d'informations d'attribut (104).

15. Dispositif de gestion de fichiers selon la revendication 14, dans lequel
ladite partie de détermination de chaîne de symboles d'informations d'attribut (104) fournit une chaîne de caractères correspondant à un mode de prise de vue utilisé pour recevoir les informations multimédia.

16. Dispositif de gestion de fichiers selon la revendication 9, dans lequel
ladite partie de détermination de nom d'informations multimédia (102, 104, 303) comprend:
une partie de détermination de numéro d'informations multimédia (102) reliée à ladite partie d'analyse de requête d'édition (101) pour déterminer un numéro de série à affecter aux informations multimédia éditées ;
une partie de détermination de chaîne de symboles d'informations d'attribut (104) reliée à ladite partie d'analyse de requête d'édition (101) pour déterminer une chaîne de symboles indiquant un attribut des informations multimédia ; et
une partie de détermination de nom de fichier (303) reliée à ladite partie de détermination de numéro d'informations multimédia (102), à ladite partie de détermination de chaîne de symboles d'informations d'attribut (104) et à ladite partie d'édition (302) pour déterminer le nom de fichier complet du fichier d'informations multimédia formant les informations multimédia éditées en fonction des sorties de ladite partie de détermination de numéro d'informations multimédia (102) et de ladite partie de détermination de chaîne de symboles d'informations d'attribut (104).

17. Dispositif de gestion de fichiers selon la revendication 16, dans lequel
ladite partie de détermination de chaîne de symboles d'informations d'attribut (104) fournit une chaîne de caractères correspondant à un mode de prise de vue utilisé pour recevoir les informations multimédia.
